# EUROPÄISCHE PATENTSCHRIFT

(11) **EP 2 656 120 B1**
(45) Veröffentlichungstag und Bekanntmachung des Hinweises auf die Patenterteilung: **24.04.2019**
(21) Anmeldenummer: 11811524.5
(22) Anmeldetag: 20.12.2011
(51) Int. Cl.: G02B 3/00, B29D 11/00, B41M 3/14

(54) **MIKROOPTISCHE BETRACHTUNGSANORDNUNG**
MICROOPTICAL VISUALISATION SYSTEM
SYSTÈME MICROOPTIQUE DE VISUALISATION

(30) Priorität: 22.12.2010 DE 102010055689
(43) Veröffentlichungstag der Anmeldung: 30.10.2013
(73) Patentinhaber: Giesecke+Devrient Currency Technology GmbH, 81677 München (DE)
(72) Erfinder: HOFFMÜLLER, Winfried, 83646 Bad Tölz (DE); RAHM, Michael, 83646 Bad Tölz (DE); BURCHARD, Theodor, 83052 Bruckmühl, OT Götting (DE); RAUCH, Andreas, 82441 Ohlstadt (DE); SEIDLER, Rudolf, 83703 Gmund (DE); BÜCKER, Anne, 83735 Bayrischzell (DE); WEINGARTNER, Armin, 82008 Unterhaching (DE); WIEDNER, Bernhard, 83714 Miesbach (DE); FUHSE, Christian, 83624 Otterfing (DE)
(86) Internationale Anmeldenummer: PCT/EP2011/006453
(87) Internationale Veröffentlichungsnummer: WO 2012/084211

(56) Entgegenhaltungen:
- WO-A2-2009/147353
- US-A- 5 800 907
- US-A1- 2004 223 071
- US-A1- 2008 160 226
- US-A1- 2009 122 412

## Beschreibung

Die Erfindung betrifft eine mikrooptische Betrachtungsanordnung mit einer Vielzahl von Mikrofokussierelementen, die in einer Soll-Fokusebene fokussieren und ein Betrachtungsraster bilden. Die Erfindung betrifft auch mikrooptische Darstellungsanordnungen, die eine erfindungsgemäße mikrooptische Betrachtungsanordnung aufweisen, Sicherheitselemente zur Echtheitssicherung von Datenträgern, die eine erfindungsgemäße mikrooptische Betrachtungsanordnung aufweisen, und Datenträger, die eine erfindungsgemäße mikrooptische Betrachtungseinrichtung aufweisen. Die Erfindung betrifft außerdem ein Verfahren zur Herstellung der mikrooptischen Betrachtungsanordnung und ein Verfahren zur Herstellung von Datenträgern mit der erfindungsgemäßen mikrooptischen Betrachtungsanordnung.

Datenträger wie Wert- oder Ausweisdokumente, Banknoten, Urkunden, Schecks, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, eines Fenster-Sicherheitsfadens, einer Abdeckfolie für eine Banknote mit Loch, eines aufgebrachten Streifens oder eines selbsttragenden Transferelements, wie eines Etiketts, das nach seiner Herstellung auf das Wertdokument aufgebracht wird, ausgebildet sein. Für die Zwecke der vorliegenden Erfindung werden unter einem Wertdokument auch Sicherheitspapiere verstanden, wobei Sicherheitspapiere eine noch nicht umlauffähige Vorstufe eines Wertdokuments darstellen.

Eine besondere Rolle spielen dabei seit längerem Sicherheitselemente mit optisch variablen Elementen, die dem Betrachter unter unterschiedlichen Betrachtungswinkeln einen unterschiedlichen Bildeindruck vermitteln, da optisch variable Elemente selbst mit hochwertigen Farbkopiergeräten nicht reproduziert werden können. Die Sicherheitselemente können dazu mit Sicherheitsmerkmalen in Form beugungsoptisch wirksamer Mikrostrukturen oder Nanostrukturen ausgestattet werden, beispielsweise mit Prägehologrammen oder anderen hologrammähnlichen Beugungsstrukturen. Derartige Strukturen werden jedoch zunehmend auch für andere Zwecke als Sicherheitsanwendungen eingesetzt, wodurch ihr Wert als Sicherheitsmerkmale gesunken ist, da sie häufig eher als Designmerkmal aufgefasst werden und wenig Beachtung finden.

Es ist auch seit längerem üblich, Linsensysteme als Sicherheitsmerkmale einzusetzen. Beispielsweise ist in der Druckschrift EP 0 238 043 A2 ein Sicherheitsfaden aus einem transparenten Material beschrieben, auf dessen Oberfläche ein Raster aus mehreren parallel laufenden Zylinderlinsen eingeprägt ist. Die Dicke des Sicherheitsfadens ist so gewählt, dass sie in etwa der Fokuslänge der Zylinderlinsen entspricht. Auf der gegenüberliegenden Oberfläche ist ein Druckbild registergenau aufgebracht, wobei das Druckbild unter Berücksichtigung der optischen Eigenschaften der Zylinderlinsen gestaltet ist.

Eine auffälligere Variante stellen sogenannte Moire-Vergrößerungsanordnungen dar. Eine derartige Moire-Vergrößerungsanordnung ist in der Druckschrift WO 2006/087138 A1 offenbart. Das dort offenbarte Sicherheitselement weist wenigstens ein erstes und ein zweites Echtheitsmerkmal auf. Das erste Echtheitsmerkmal umfasst dabei eine erste Anordnung mit einer Vielzahl von fokussierenden Elementen, die in einem ersten Raster vorliegen, sowie eine zweite Anordnung mit einer Vielzahl von mikroskopischen Strukturen, die einem zweiten Raster vorliegen. Die erste und die zweite Anordnung sind zueinander derart angeordnet, dass die mikroskopischen Strukturen der zweiten Anordnung bei Betrachtung durch die fokussierenden Elemente der ersten Anordnung in Vergrößerung zu sehen sind.

Die prinzipielle Funktionswiese von Moire-Vergrößerungsanordnungen ist in dem Artikel "The moire-magnifier", M.C. Hutley, R. Hunt, R.F. Stevens and P. Savander, Pure Appl. Opt. 3 (1994), S. 133 bis 142, beschrieben. Kurz gesagt bezeichnet Moire-Vergrößerung das Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moire-Muster, das aus einer periodischen Anordnung vergrößerter und gegebenenfalls gedrehter Bilder der Elemente des Bildrasters besteht.

Weitere mikrooptische Vergrößerungsanordnungen vom Moire-Typ sind in den Anmeldungen DE 10 2007 029 203 A1 und WO 2009/000529 A2 beschrieben, und sogenannte Modulo-Vergrößerungsanordnungen sind in den Anmeldungen WO 2009/ 000527 A1 und WO 2009/000528 A1 beschrieben. Alle diese mikrooptischen Vergrößerungsanordnungen enthalten ein Motivbild mit Mikrostrukturen, das bei Betrachtung mit einem geeignet abgestimmten Betrachtungsraster ein vorgegebenes Sollbild rekonstruiert. Wie in den oben genannten Druckschriften und Anmeldungen genauer erläutert, lassen sich dabei eine Vielzahl visuell attraktiver Vergrößerungseffekte und Bewegungseffekte erzeugen, die zu einem hohen Wiedererkennungswert und einer hohen Fälschungssicherheit der damit ausgestatteten Sicherheitselemente bzw. Wertdokumente führen.

Bei den bekannten Moire-Vergrößerungsanordnungen (Moiré-Magnifier) besteht das darzustellende Bild aus Einzelmotiven, die in einem Gitter periodisch angeordnet sind. Das durch die Linsen zu betrachtende Motivbild stellt eine stark verkleinerte Version des darzustellenden Bildes dar, wobei die jedem Einzelmotiv zugeordnete Fläche maximal etwa einer Linsenzelle entspricht. Aufgrund der Kleinheit der Linsenzellen kommen als Einzelmotive nur relativ einfache Gebilde in Frage. Im Gegensatz dazu ist das Sollbild beim "Modulo-Mapping" im Allgemeinen ein Einzelbild, d.h. es muss sich nicht zwangsläufig aus einem Gitter periodisch wiederholter Einzelmotive zusammensetzen. Das Sollbild kann ein komplexes Einzelbild mit hoher Auflösung darstellen. Bei Modulo-Vergrößerungsanordnungen ist nicht notwendigerweise ein Moire-Effekt beteiligt, und es muss sich auch nicht zwangsläufig um eine Vergrößerung handeln. Vielmehr weist die Bezeichnung "Mapping" auf beliebige Abbildungen hin.

Häufig ist es wünschenswert, mikrooptische Darstellungsanordnungen an ihrer Oberseite, d.h. der Linsenseite, mit Beschichtungen auszustatten, die eine bestimmte Funktion erfüllen, beispielsweise mit Schmutz abweisenden Beschichtungen und/oder mit Klebstoffschichten.

Insbesondere stark beanspruchte Wertdokumente wie Banknoten werden oft mit Schmutz abweisenden Beschichtungen ausgestattet, um ihre Umlaufdauer zu erhöhen. Weist eine Banknote oder ein sonstiges Wertdokument eine mikrooptische Darstellungsanordnung auf, beispielsweise einen Moire-Magnifier oder eine Modulo-Mapping-Anordnung, so ist es natürlich wünschenswert, auch diese Anordnung zu beschichten, da sie ansonsten stärker verschmutzt als der Rest der Banknote.

Allerdings liefern mikrooptische Darstellungsanordnungen nur dann eine scharfe Abbildung, wenn sich die abzubildenden Mikrostrukturen exakt in der Fokusebene der Linsen oder der sonstigen mikrofokussierenden Elemente befinden. Eine Überbeschichtung der Linsen, beispielsweise mit einer Schmutz abweisenden Beschichtung, führt zu einer Verschlechterung und im schlimmsten Fall zu einer Zerstörung des optischen Effekts, da sich die Brennweite (Fokuslänge) der mikrofokussierenden Elemente durch die Überbeschichtung verändert, und dadurch die Mikrostrukturen nicht mehr exakt in der Fokusebene der mikrofokussierenden Elemente liegen: die Abbildung wird unscharf oder kann sogar ganz "verschwinden".

Ein ähnliches Problem tritt beim Einbetten von Fenstersicherheitsfäden mit mikrooptischen Darstellungsanordnungen auf. Die Fenstersicherheitsfäden weisen an ihrer Oberseite, der Linsenseite, Bereiche auf, die nicht von Papier bedeckt sind (Fenster), und Bereiche, die von Papier bedeckt sind. In den Fensterbereichen sollte vorteilhafterweise eine Schmutz abweisende Beschichtung vorgesehen werden, während in den bedeckten Bereichen eine Klebstoffschicht vorgesehen werden sollte, um den Faden mit den aufliegenden Papierbereichen zu verkleben. Ohne Verklebung heben sich die über dem Faden liegenden Papierstege leicht vom Faden ab und können dadurch schnell beschädigt werden.

Nun ist es zwar grundsätzlich möglich, in den von Papierstegen bedeckten Bereichen eines Sicherheitsfadens eine Beschichtung der fokussierenden Elemente mit Klebstoff vorzunehmen, da der Faden in diesen Bereichen nicht sichtbar ist und eine Verschlechterung des optischen Effekts somit belanglos ist. In der Praxis ist es jedoch kaum möglich, selektiv nur die später unter Papierstegen verborgenen Bereiche eines Sicherheitsfadens mit Klebstoff zu beschichten. Außerdem ist es in der Praxis kaum möglich, bei der abschließenden Ausstattung einer Banknote mit einer Schmutz abweisenden Beschichtung selektiv bestimmte Teilbereiche wie die Fensterbereiche eines Fenstersicherheitsfadens auszusparen. Man muss sich daher entscheiden, ob man auf ein Verkleben des Fenster-sicherheitsfadens mit den über dem Faden liegenden Papierstegen und/oder auf die Ausstattung mit einer Schmutz abweisenden Beschichtung verzichtet oder ob man eine Verschlechterung der optischen Qualität des Fadens durch Überbeschichten der Linsen in Kauf nimmt.

Aus der Druckschrift WO 2009/147353 A2 sind gedruckte optische Elementen wie Mikrolinsen bekannt. Um die endgültige Form des optischen Elements zu erhalten, wird ein gedruckter transparenter Kern mit einer oder mehreren zusätzlichen Schichten bedeckt.

Aufgabe der vorliegenden Erfindung ist es daher, die oben genannten Probleme des Stands der Technik zu vermeiden und mikrooptische Betrachtungsanordnungen für mikrooptische Darstellungsanordnungen wie beispielsweise Moire-Magnifier und Modulo-Mapping-Anordnungen bereitzustellen, die auf ihrer Oberseite mit einer oder mehreren funktionalen Beschichtungen ausgestattet sind, aber dennoch scharfe Abbildungen der abzubildenden Mikrostrukturen liefern. Funktionale Beschichtungen sind insbesondere Beschichtungen, die eine Verklebung ermöglichen, so wie Beschichtungen, die einen Schutz gegen Verschmutzung und/oder Verkratzen gewährleisten.

Aufgabe der vorliegenden Erfindung ist es auch, mikrooptische Darstellungsanordnungen, die eine mit einer funktionalen Beschichtung ausgestattete mikrooptische Betrachtungsanordnung aufweisen, Sicherheitselemente zur Echtheitssicherung von Datenträgern, die eine mit einer funktionalen Beschichtung ausgestattete mikrooptische Betrachtungsanordnung aufweisen, und Datenträger, die eine mit einer funktionalen Beschichtung ausgestattete mikrooptische Betrachtungsanordnung aufweisen, bereitzustellen.

Aufgabe der vorliegenden Erfindung ist es außerdem, ein Verfahren zur Herstellung einer mit einer funktionalen Beschichtung ausgestatteten mikrooptischen Betrachtungsanordnung, und ein Verfahren zur Herstellung von Datenträgern, die eine mit einer funktionalen Beschichtung ausgestattete mikrooptische Betrachtungsanordnung aufweisen, bereitzustellen.

Die Aufgaben werden gelöst durch das Verfahren zur Herstellung einer mikrooptischen Darstellungsanordnung mit den Merkmalen, wie sie im Anspruch 1 angegeben sind. Eine mikrooptische Darstellungsanordnung, ein Sicherheitselement, ein Datenträger und ein Verfahren zur Herstellung von Datenträgern sind in den nebengeordneten Ansprüchen angegeben. Vorteilhafte Ausgestaltungen der Erfindung sind Gegenstand der abhängigen Ansprüche.

Gemäß der Erfindung weist ein gattungsgemäßes Verfahren folgende Schritte auf:
- Herstellen einer rasterförmigen Anordnung von Grundkörpern in Form von Mikrofokussierelement-Vorformen wobei die Herstellung der rasterförmigen Anordnung von Grundkörpern erfolgt
   - durch Prägen der Grundkörper in eine thermoplastische Folie oder in eine mit einem strahlenhärtbaren Lack beschichtete Folie mit nachfolgendem Bestrahlen, oder
   - durch Erzeugen zylindrischer Grundkörper-Vorformen aus einem Photoresistmaterial und anschließendes Schmelzen der Grundkörper-Vorformen zu sphärischen Grundkörpern,
- Kombinieren der rasterförmigen Anordnung von Grundkörpern mit der Mikrostrukturanordnung, , und
- Ausbilden von Ergänzungskörpern auf dem Grundkörperraster, oder zumindest auf einem sich über mehrere Grundkörper erstreckenden Teilbereich des Grundkörperrasters, durch Beschichten des Grundkörperrasters mit mindestens einer Beschichtung, wobei die Ergänzungskörper die Grundkörper zu den Mikrofokussierelementen mit der vorgegebenen Soll-Fokuslänge ergänzen, so dass die Mikrofokussierelemente in der Ebene der Mikrostrukturanordnung fokussieren,
wobei jeder Grundkörper eine gekrümmte Oberfläche mit einem Scheitel oben und einer Basis unten aufweist, wobei allen Punkten auf der Oberfläche lokale Krümmungsradien zugeordnet sind, die gleich oder verschieden sein können, und wobei die mindestens eine Beschichtung die Grundkörper derart ergänzt, dass die Mikrofokussierelemente zumindest im Bereich ihres Scheitels größere lokale Krümmungsradien aufweisen als die Grundkörper.

Der Grundgedanke der vorliegenden Erfindung besteht somit darin, die gewünschten funktionalen Beschichtungen in die Mikrofokussierelemente zu integrieren, d.h. die Mikrofokussierelemente als Verbundkörper auszubilden, die als einen Bestandteil des Verbundkörpers die gewünschte funktionale Schicht aufweisen. Der Brennpunkt bzw. die Fokuslänge des mikrofokussierenden Verbundelements ergibt sich als Kombination der Eigenschaften des fertiggestellten Verbundkörpers, d.h. der Verbund-Mikrolinse in dem Zustand, in dem sie sich auf dem fertiggestellten, umlauffähigen Datenträger befindet.

In einer mikrooptischen Darstellungsanordnung müssen die Mikrofokussierelemente der mikrooptischen Betrachtungsanordnung eine bestimmte Brennweite (Soll-Fokuslänge) aufweisen, um eine scharfe Abbildung der darzustellenden Mikrostrukturelemente zu gewährleisten. Um zu vermeiden, dass funktionale Beschichtungen die Soll-Fokuslänge verändern und damit zu einer unscharfen Abbildung führen, geht man bei der Herstellung einer erfindungsgemäßen mikrooptischen Betrachtungsanordnung von einer Vorform einer mikrooptischen Betrachtungsanordnung aus, d.h. von einer mikrooptischen Betrachtungsanordnung, deren Mikrofokussierelemente eine "falsche" Fokuslänge haben Die Mikrofokussierelemente werden im Folgenden auch als "Mikrolinsen" bezeichnet.

Die Mikrolinsen-Vorformen erhalten erst durch die Beschichtung die endgültige Form einer funktionstauglichen Mikrolinse, sie stellen also Grundkörper dar, die durch die Beschichtung, oder auch durch mehrere Beschichtungen, zu einer funktionstauglichen Mikrolinse ergänzt werden. Gemäß einer besonderen Variante der vorliegenden Erfindung erhalten die Mikrolinsen ihre endgültige Form erst im Zuge der Einbringung in ein Wertdokument, wodurch sichergestellt ist, dass die Funktionalität einer mikrooptischen Darstellungsanordnung als Sicherheitsmerkmal zum richtigen Zeitpunkt, nämlich zum Zeitpunkt der Fertigstellung des zu sichernden Produkts, gewährleistet ist.

Die Vorformen der erfindungsgemäßen mikrooptischen Betrachtungsanordnung, also rasterförmige Anordnungen von Grundkörpern, insbesondere Mikrolinsen-Grundkörpern, können hergestellt werden, wie es im Stand der Technik für mikrooptische Betrachtungsanordnungen bekannt ist, beispielsweise mittels der in WO 2006/087138 A1 für mikrooptische Betrachtungsanordnungen offenbarten Techniken, oder nach den aus der deutschen Patentanmeldung 10 2006 029 852 A1 bekannten Verfahren.

Besonders geeignet zur Herstellung großer Flächen von Mikrolinsen-Anordnungen, bzw. im vorliegenden Fall zur Herstellung von Mikrolinsengrundkörper-Anordnungen, sind die bekannten Verfahren zur Prägung in thermoplastische Folien oder in mit strahlungshärtenden Lacken beschichtete Folien. Geeignete Folien sind beispielsweise transparente Kunststofffolien wie PET, wobei die Foliendicken bevorzugt unter 50 µm, besonders bevorzugt bei etwa 5 bis 25 µm, liegen. Auch unter Verwendung von Photoresistmaterialien kann ein geeigneter Mikrolinsen-Grundkörper hergestellt werden, worauf später noch eingegangen werden wird.

Die Vorformen der erfindungsgemäßen mikrooptischen Betrachtungsanordnungen stellen also insbesondere Rasteranordnungen von Mikrolinsen-Grundkörpern dar, wobei die Mikrolinsen-Grundkörper keine für mikrooptische Darstellungsanordnungen geeignete Linsenform zu haben brauchen, aber eine derartige Linsenform haben können, d.h. es kann sich um sauber fokussierende Linsen handeln, nur eben mit einer unbrauchbaren Fokuslänge. Es sind alle Rastersymmetrien geeignet, die auch für mikrooptische Betrachtungsanordnungen des Stands der Technik Anwendung finden, und auch die Form und Abmessungen der fertiggestellten Verbundlinsen der erfindungsgemäßen mikrooptischen Betrachtungsanordnungen entsprechen den üblichen Formen und Abmessungen, d.h. die fertigen Verbundlinsen sind beispielsweise sphärisch, asphärisch, elliptisch oder zylindrisch und haben Durchmesser im Bereich von etwa 10 bis 25 µm. Lang gestreckte Linsen wie zylindrische Linsen können in Längsrichtung natürlich wesentlich größere Abmessungen aufweisen. Die Anordnung der fertiggestellten Mikrolinsen im Raster ist möglichst flächendeckend, um eine gute Abbildung zu gewährleisten. Um zu einer geringeren Strukturhöhe zu gelangen, können die fertigen Verbundlinsen auch durch Fresnellinsen gebildet sein.

Die Mikrolinsengrundkörper können im Wesentlichen dieselbe Form aufweisen wie die fertiggestellten Mikrolinsen, müssen es aber nicht. Beispielsweise können die Grundkörper sphärisch sein, während die fertigen Mikrolinsen asphärisch sind. Die Grundkörper haben mit Vorteil kleinere Abmessungen als die fertigen Mikrolinsen, d.h. es gibt in der Rasteranordnung größere Zwischenräume zwischen benachbarten Grundkörpern, die erst im Zuge der Ergänzung der Grundkörper zu den fertigen Verbundlinsen geschlossen werden.

Insbesondere haben die Mikrolinsengrundkörper nicht die gewünschte Soll-Fokuslänge. Diese erhalten sie erst durch die ergänzende Beschichtung und die damit einhergehende Veränderung ihrer Form.

Zur Herstellung einer erfindungsgemäßen mikrooptischen Betrachtungsanordnung geht man vorteilhafterweise von einer Rasteranordnung von Mikrolinsengrundkörpern aus, deren Krümmungsradien, insbesondere an der Basis (in dem Bereich, in dem die Grundkörper mit dem Träger verbunden sind bzw. in ihn übergehen), zur Erzielung der gewünschten Soll-Fokuslänge zu gering sind, und die in einem Raster mit geringfügig (etwa 1 bis 3 µm) größeren Zwischenräumen zwischen den Grundkörpern als sie für die fertigen Mikrolinsen gewünscht werden, angeordnet sind. Im Übrigen müssen sich die Grundkörper natürlich im Raster an denselben Positionen befinden, an denen sich später die fertigen Mikrolinsen befinden sollen. Insbesondere müssen die Grundkörper so angeordnet sein, dass sich die Brennpunkte der späteren Mikrolinsen nicht nur vertikal, sondern auch lateral, an den richtigen Stellen befinden.

Die Beschichtung wird durchgeführt, indem das gewünschte Beschichtungsmittel, beispielsweise ein heißsiegelfähiger Klebstoff oder ein Schmutz abweisender Lack, durch ein geeignetes Beschichtungsverfahren auf die Grundkörper-Rasteranordnung aufgetragen wird. Die Auftragungsverfahren sind nicht in irgendeiner Weise beschränkt, und es kommen insbesondere Sprühverfahren, Streichverfahren und Druckverfahren, wie beispielsweise Tiefdruck, Offsetdruck und Flexodruck, in Frage.

Beim Auftragen der Beschichtung verteilt diese sich nicht gleichmäßig, sondern sie sammelt sich insbesondere in den Rasterzwischenräumen an. Um zu vermeiden, dass die Rasterzwischenräume aufgefüllt werden und eine mehr oder weniger ebene Oberfläche erhalten wird, wodurch der gewünschte optische Effekt zerstört würde, dürfen keine zu großen Mengen an Beschichtungsmittel aufgetragen werden. Durch eine geeignete Wahl der Menge und der Viskosität des Beschichtungsmittels kann erreicht werden, dass die Grundkörper-Rasteranordnung vollständig, aber ungleichmäßig bedeckt wird. Mit Vorteil sammelt sich in den Zwischenräumen zwischen den Grundkörpern deutlich mehr Beschichtungsmittel an als an den Oberflächen der Grundkörper. Gemäß einer bevorzugten Ausgestaltung wird aus einem Grundkörper-Linsenraster ein Verbundkörper-Linsenraster gebildet, wobei die Verbundkörperlinsen zwar im Wesentlichen die Form der Grundkörperlinsen nachbilden, sie aber auch verändern, wobei die Veränderung örtlich variiert und umso stärker ist, je näher an der Linsenbasis sich die betrachtete Stelle befindet. Am Linsenrand bzw. an der Linsenbasis können die Verbundkörperlinsen beispielsweise einen deutlich größeren Krümmungsradius haben als die Grundkörperlinsen, und die Ränder der Verbundkörperlinsen können einen geringeren Abstand voneinander haben als die Ränder der Grundkörperlinsen.

Zusammenfassend gesagt hat die erfindungsgemäße mikrooptische Betrachtungsanordnung mit Verbundkörperlinsen dieselbe Anzahl an Linsen an denselben Positionen wie die Grundkörper des Grundkörperrasters, aber die Verbundkörperlinsen haben eine größere Flächendeckung, sind im Allgemeinen gegenüber den Grundkörpern abgeflacht und fokussieren - sofern schon die Grundkörper eine fokussierende Wirkung haben - in einer anderen Fokusebene als die Grundkörper.

Das Ausmaß der Verschiebung der Fokusebene ist von mehreren Faktoren abhängig, insbesondere von Form, Material und Brechungsindex der Grundkörperlinsen, von Form, Material und Brechungsindex der ergänzenden Beschichtung, d.h. im Wesentlichen von Material, Viskosität und Verlaufeigenschaften der Beschichtungszusammensetzung, und von den Auftragungsbedingungen, beispielsweise der Art des Auftragungsverfahrens und den Temperaturen. Es mag daher auf den ersten Blick äußerst komplex erscheinen, alle Faktoren in geeigneter Weise aufeinander abzustimmen, um am Ende eine mikrooptische Betrachtungsanordnung mit passend fokussierenden Verbundkörperlinsen zu erhalten. Tatsächlich ist die Herstellung gewünschter Verbundkörperlinsen jedoch überraschend einfach. Es kann zwar keine allgemein gültige Formel angegeben werden, die alle Faktoren berücksichtigt und bei Einhaltung der entsprechenden Bedingungen zu den gewünschten Fokuslängen führt, sondern es muss in jedem Einzelfall empirisch vorgegangen werden. Allerdings kann man normalerweise auch in jedem Einzelfall mit Hilfe nur weniger Versuche zu dem gewünschten Ergebnis gelangen, indem man folgendermaßen vorgeht:

Einige Parameter stehen von vornherein fest oder sind nur in geringem Umfang variierbar. Fest steht typischerweise das gewünschte Beschichtungsmaterial, beispielsweise ein Polyamid (zur Ausbildung einer gleichzeitig heißsiegelfähigen und Schmutz abweisenden Beschichtung), sowie die gewünschte Rastergeometrie. Ein Fachmann wird daher beispielsweise ein entsprechendes Linsengrundkörper-Raster aus üblichen Materialien mit Grundkörperlinsen von etwas geringeren Abmessungen (kleineren Krümmungsradien) als den der gewünschten Verbundkörperlinsen herstellen. Auf der Basis seines Fachwissens kann er zumindest grob abschätzen, welche Materialien und Formen geeignet sein könnten. In einer einfachen Variante wird für die Grundkörperlinsen ein Material gewählt, dessen Brechungsindex dem Brechungsindex des Beschichtungsmaterials möglichst ähnlich ist. Dann wird das Beschichtungsmaterial gelöst, im Falle eines Polyamids beispielsweise in einem binären Lösungsmittelgemisch wie Ethanol/Toluol, auf die Grundkörperlinsen-Rasteranordnung aufgetragen, und nach der Trocknung schließlich die Fokuslänge der erhaltenen Verbundkörperlinsen bestimmt.

Ist die Fokuslänge noch zu kurz, kann man die Viskosität des Beschichtungsmittels senken, beispielsweise durch eine größere Menge an Lösungsmittel oder, bei lösungsmittelfreien Beschichtungszusammensetzungen, durch Temperaturerhöhung. Dadurch sammelt sich relativ mehr Beschichtungsmaterial an der Linsenbasis und relativ weniger Beschichtungsmaterial an der Linsenoberseite. Es wird eine stärkere Abflachung erzielt, was zu einer Vergrößerung der Fokuslänge führt.

Wenn durch das Auftragen der Beschichtung Verbundkörperlinsen mit einer zu langen Fokuslänge erhalten werden, verfährt man entsprechend umgekehrt.

Zusätzlich oder alternativ kann man auch die Auftragsmenge der Beschichtung variieren. Sehr geringe Auftragsmengen sammeln sich bevorzugt in den Zwischenräumen zwischen den Grundkörpern an, während bei zunehmender Auftragsmenge in überproportionalem Umfang auch die Oberflächen der Grundkörper bedeckt werden. Natürlich darf die Auftragsmenge nicht so groß werden, dass die Linsenform "zugeschmiert" wird. Innerhalb eines gewissen Bereichs kann man sagen, dass weniger große Auftragsmengen zu einer stärkeren Verschiebung der Fokusebene führen.

Als eine weitere Alternative kann man auch die Form der Grundkörper verändern. Bei ansonsten unveränderten Bedingungen (gleiches Beschichtungsmaterial, gleiche Viskosität der Beschichtungszusammensetzung, gleiche Auftragsmenge, gleiche Auftragstemperatur, etc.) können Grundkörper, die bereits eine etwas abgeflachte Form besitzen, beispielsweise eine geringere Veränderung der Fokuslänge ergeben als nahezu sphärische Grundkörper. Sollte ein gewünschtes Beschichtungsmaterial die Tendenz haben, stets mehr oder weniger vollständig in die Zwischenräume zwischen den Grundkörpern zu fließen, anstatt teilweise an den Oberflächen der Grundkörper zu haften, helfen Oberflächen modifizierende Maßnahmen an den Grundkörpern vor der Durchführung der Beschichtung. Derartige Maßnahmen sind beispielsweise eine Behandlung mit einem Primer und physikalische Vorbehandlungen wie Corona-Behandlung, Plasmabehandlung, Beflammung, wobei gegebenenfalls spezielle Prozessgase wie beispielsweise Wasserstoff, Stickstoff, Kohlenmonoxid, Kohlendioxid, oder Silane verwendet werden können.

Alternativ oder zusätzlich können die Vorformen bzw. Grundkörper von vornherein mit einer gewollten Rauhigkeit hergestellt werden, um die nachträglich aufgebrachte Beschichtung besser zu verankern. Darüber hinaus ist es möglich, beispielsweise durch eine Modifikation der Vorformen auf Submikrometer-Skala oder durch zusätzlich geprägte Nanostrukturen auf und/oder zwischen den Vorformen, Einfluss auf die Verteilung der Beschichtung zu nehmen, beispielsweise durch Selbstorganisation infolge lokal variierender Oberflächenspannung.

Wenn die Beschichtung dazu neigt, zu stark an den Grundkörpern zu haften, anstatt mehr in die Zwischenräume zwischen den Grundkörpern zu fließen, können die Grundkörper oder bestimmte Bereiche der Grundkörper auch mit einer Lotusstruktur ausgestattet werden, um schwer benetzbare Oberflächen zu erzeugen. Derartige Lotusstrukturen verringern die Kontaktfläche zwischen den Grundkörpern und der Beschichtung, so dass das Beschichtungsmaterial praktisch nicht an der Oberfläche der Grundkörper haften kann und leichter in die Zwischenräume fließt.

Schließlich besteht auch noch die Möglichkeit, auf andere Materialien mit anderen Brechungsindizes auszuweichen. Dies ist jedoch in der Regel nicht erforderlich. Vielmehr ist es meist ausreichend, die Viskosität des Beschichtungsmaterials oder die Auftragsmenge des Beschichtungsmaterials oder die Form (insbesondere die Krümmungsradien) der Grundkörper zu verändern, um das gewünschte Ergebnis zu erzielen.

Gemäß einer anderen Ausführungsform der vorliegenden Erfindung werden die Grundkörperlinsen nicht unmittelbar hergestellt, wie durch Prägen in thermoplastischem Lack oder UV-Lack, sondern aus Grundkörper-Vorformen erschmolzen. Dazu wird eine Trägerfolie mit einem positiven oder einem negativen Photoresistmaterial beschichtet, in den nicht zu bestrahlenden Bereichen abgedeckt, bestrahlt und entwickelt, das heißt, die bestrahlten Bereiche (positiver Resist) bzw. die nicht bestrahlten Bereiche (negativer Resist) werden gelöst. Das Abdecken vor dem Bestrahlen erfolgt so, dass nach dem Entwickeln Zylinderstrukturen auf dem Träger zurückbleiben, deren Positionen die Positionen der späteren Linsen bestimmen. Diese Zylinder werden anschließend aufgeschmolzen, wodurch sich kleine Tröpfchen mit sphärischer Oberfläche bilden, die nach dem Abkühlen dann sphärische Linsen ergeben. Durch galvanische Abformung kann hieraus auch eine Negativform erhalten werden, mit der die Linsen dann alternativ beispielsweise in thermoplastischen Lack geprägt werden können.

Dieses Verfahren zur Herstellung von Mikrolinsen-Anordnungen wird häufig angewendet, weist aber einige Nachteile auf. Damit nämlich beim Aufschmelzen der Zylinder benachbarte Tröpfchen nicht zusammenfließen, müssen die Zylinder und damit die späteren Linsen einen gewissen Mindestabstand aufweisen. Dadurch wird letztlich nur ein Teilbereich der Gesamtfläche mit Linsen belegt, was in mikrooptischen Darstellungsanordnungen zu schlechten Kontrasten der dargestellten Bilder führt. Der mit einer mikrooptischen Darstellungsanordnung erzielbare Kontrast ist umso besser, je geringer die Abstände zwischen den Linsen sind. Am besten sind die Abbildungseigenschaften bei einer mikrooptischen Betrachtungsanordnung mit einer flächendeckenden Anordnung sich berührender Linsen. Außerdem sind die Abbildungseigenschaften sphärischer Linsen, wie sie bei dem obigen Verfahren unter Verwendung von Photoresistmaterialien erhalten werden, schlechter als die Abbildungseigenschaften asphärischer Linsen. Von besonderem Vorteil sind die Abbildungseigenschaften von asphärischen Linsen, deren lokaler Krümmungsradius von der Linsenmitte, d.h. dem Scheitelpunkt der Linse, zur Linsenbasis hin zunimmt. Bei den erfindungsgemäßen mikrooptischen Betrachtungsanordnungen, bei denen die beabstandeten sphärischen Linsen lediglich als Grundkörper für Verbundkörperlinsen dienen, werden gleichzeitig beide Nachteile behoben. Zum einen werden durch die Ergänzungskörper, d.h. die eine oder die mehreren Beschichtungen auf den Grundkörpern, die Zwischenräume deutlich verkleinert, im Idealfall soweit, dass die Verbundkörperlinsen unmittelbar aneinander angrenzen, und zum anderen werden durch das erfindungsgemäße Verfahren asphärische Verbundkörperlinsen erzeugt, da sich die Beschichtung vergleichsweise stärker an den Rändern der Grundkörper sammelt und somit den lokalen Krümmungsradius insbesondere an der Basis der Grundkörperlinsen vergrößert. Derartige asphärische Linsen haben beispielsweise den Vorteil, dass bei einer Moire-Vergrößerungsanordnung die Abbildung bei größeren Kippwinkeln länger scharf bleibt.

Der Ergänzungskörper, also der Teil der Verbundkörperlinsen, der die Grundkörperlinsen zu den funktionsfähigen Verbundkörperlinsen mit der gewünschten Soll-Fokuslänge ergänzt, kann in einem Schritt oder in mehreren Schritten gebildet werden. Insbesondere kann der Ergänzungskörper durch Auftragen einer einzigen Beschichtung oder durch Auftragen mehrerer Beschichtungen erzeugt werden, wobei die Beschichtungen dieselbe oder verschiedene Funktionen haben können. Es kann beispielsweise zuerst eine Beschichtung auf die Grundkörper-Rasteranordnung aufgetragen werden, die Sicherheitsmerkmale wie fluoreszierende Partikel oder Partikel mit Farbkippeffekt enthält, oder die gefärbt ist, und darauf dann eine weitere Schicht wie eine Schutzschicht oder eine Klebstoffschicht aufgetragen werden. Die gewünschten Abbildungseigenschaften der Verbundkörperlinse, insbesondere die Soll-Fokuslänge, muss durch die Gesamtheit der Beschichtungen erreicht werden.

Um die Kratzfestigkeit mikrooptischer Darstellungsanordnungen zu verbessern, oder auch um den Brechungsindex einer Beschichtung zu erhöhen, können den Beschichtungen Nanopartikel zugegeben werden. Geeignet sind beispielsweise Siliciumdioxid, Zinksulfid, Zinkoxid, Zirkoniumdioxid, Titandioxid und Zinksulfid. Die Partikel sollten eine Teilchengröße von unter 100 nm haben, um eine ungewollte Lichtstreuung zu vermeiden.

Gemäß einer besonderen Ausführungsform der vorliegenden Erfindung erhalten die Verbundkörperlinsen ihre endgültige Form, und damit ihre Soll-Fokuslänge, erst beim Einbringen der mikrooptischen Darstellungsanordnung in ein Wertdokument. Das heißt, ein Sicherheitselement mit einer mikrooptischen Darstellungsanordnung muss nicht notwendigerweise eine scharfe Darstellung liefern, sondern lediglich so ausgebildet sein, dass im Zuge der bestimmungsgemäßen Einbringung des Sicherheitselements in ein Wertdokument, und gegebenenfalls weiterer Behandlungen des Wertdokuments, die Verbundkörperlinsen so verändert werden, dass sie ihre Soll-Fokuslänge erhalten und somit eine scharfe Darstellung ergeben. Als Beispiele seien ein auf ein Wertdokument aufzuklebender Patch und ein Fenstersicherheitsfaden genannt, die jeweils erfindungsgemäß mikrooptische Darstellungsanordnungen aufweisen.

Wie eingangs bereits erläutert, ist es wünschenswert, Wertdokumente wie beispielsweise Banknoten zur Verlängerung ihrer Umlaufdauer mit schützenden Beschichtungen auszustatten. Diese Beschichtungen sollten zweckmäßigerweise ganz am Ende des Herstellungsprozesses aufgetragen werden, um auch die Sicherheitselemente des Wertdokuments zu schützen. Wird nun als Sicherheitselement ein Patch mit einer erfindungsgemäßen mikrooptischen Darstellungsanordnung verwendet, sollten die Verbundkörperlinsen ihre Soll-Fokuslänge erst durch das Auftragen der schützenden Beschichtung erhalten. Das bedeutet, dass das Sicherheitselement selbst ein noch unvollständiges Sicherheitsmerkmal aufweist, nämlich eine mikrooptische Darstellungsanordnung, die aufgrund eines fehlenden oder unvollständigen Ergänzungskörpers der Verbundkörperlinsen keine scharfe Darstellung ergibt.

Bei einem Fenstersicherheitsfaden ergibt sich das zusätzliche Problem, dass er nicht nur vor Verschmutzung geschützt, sondern stellenweise auch an der Oberseite der Linsen mit dem Papier verklebt werden muss. Die Oberseite des Sicherheitselements, das heißt die Oberseite der Linsen, muss also mit einem Klebstoff beschichtet werden. Es ergeben sich nun grundsätzlich zwei Möglichkeiten. Die eine Möglichkeit besteht darin, einen Klebstoff zu verwenden, der ausschließlich Klebstoff-Eigenschaften hat, den Fenstersicherheitsfaden in das Wertdokument einzubringen und zu verkleben, und dann das gesamte Wertdokument mit einer schützenden Beschichtung auszustatten. Nach dem Auftragen der schützenden Beschichtung müssen die in den Fensterbereichen sichtbaren mikrooptischen Darstellungsanordnungen ein scharfes Bild liefern. Daher muss der Ergänzungskörper, bestehend aus Klebstoff und Schutzschicht, in Verbindung mit dem Grundkörper Verbundkörperlinsen ergeben, die ein scharfes Bild liefern. In diesem Fall setzt sich der Ergänzungskörper aus zwei Schichten zusammen.

Die andere Möglichkeit besteht darin, einen Klebstoff zu verwenden, der gleichzeitig auch schützende Eigenschaften besitzt, das heißt, vorzugsweise Schmutz abweisend ist. In diesem Fall ist es möglich, das Wertdokument zuerst mit einer schützenden Beschichtung auszustatten und dann den Fenstersicherheitsfaden in das Wertdokument einzubringen. Bevorzugt wird für derartige Anwendungen ein heißsiegelfähiger Klebstoff verwendet. Beim Vorgang des Heißsiegelns schmilzt und fließt der Klebstoff nicht nur in den zu verklebenden Bereichen, sondern auch in den Fensterbereichen, so dass die Klebstoff-Beschichtung ihre Form verändert, was wiederum zu einer Veränderung der Fokuslänge der Verbundkörperlinsen führt. Der Fenstersicherheitsfaden wird dementsprechend so ausgebildet, dass erst durch das Schmelzen des Klebstoffs beim Heißsiegeln Verbundkörperlinsen erhalten werden, die ein scharfes Bild ergeben. Dieser Sicherheitsfaden ist also ebenfalls ein Sicherheitselement mit einer mikrooptischen Darstellungsanordnung als Sicherheitsmerkmal, die keine scharfe Darstellung liefert. Eine scharfe Darstellung wird erst durch die bestimmungsgemäße Weiterbehandlung des Sicherheitselements (im vorliegenden Fall Verkleben durch Heißsiegeln) erhalten.

Alternativ ist es auch möglich, Teilbereiche eines Sicherheitselements mit unterschiedlichen Grundkörpern und/oder unterschiedlichen Ergänzungskörpern auszustatten, oder Teilbereiche eines Sicherheitselements mit "normalen" Linsen und andere Teilbereiche mit erfindungsgemäßen Verbundkörperlinsen auszustatten. In diesen Fällen ist eine zur Lage der Grundkörper registerhaltige Auftragung der Beschichtung bzw. Beschichtungen erforderlich, was zwar verfahrensmäßig aufwendiger ist, aber besonders interessante Effekte hervorrufen kann. Beispielsweise lassen sich auf diese Weise in eng nebeneinander liegenden Bereichen Scharfstellungen in mehreren unterschiedlichen Fokusebenen erreichen.

Die erfindungsgemäßen mikrooptischen Darstellungsanordnungen können auch "einkaschiert" werden, also beispielsweise als Sicherheitsmerkmale für Folienverbundbanknoten verwendet werden, insbesondere für Folienverbundbanknoten, bei denen ein Papiersubstrat einseitig oder bevorzugt beidseitig mit einer Kunststofffolie kaschiert ist. In der Banknote ist die mikrooptische Darstellungsanordnung dann von einer Kunststofffolie bedeckt. Zum Einkaschieren wird z. B. ein lösungsmittelfreier Klebstoff auf die Rasteranordnung der Grundkörperlinsen aufgetragen, und dann eine Kunststofffolie unter erhöhter Temperatur damit verbunden. Die mikrooptische Darstellungsanordnung des verwendeten Sicherheitselements enthält in diesem Fall also lediglich die Grundkörperlinsen. Die Temperatur muss so gewählt werden, dass der Klebstoff schmilzt und so verfließt, dass unter der obersten Polymerlage der Folienverbundbanknote Hohlräume entstehen, die oben durch die Kaschierfolie und unten durch die Rasteranordnung der Verbundkörperlinsen eingeschlossen werden. Es ist vorteilhaft, Linsenformen zu verwenden, die eine möglichst kleine Kontaktfläche zwischen Verbundkörperlinse und Kunststofffolie (Polymerlage) bieten.

Zur Herstellung der Ergänzungskörper der Verbundkörperlinsen können zwar grundsätzlich beliebige Beschichtungen verwendet werden, aber natürlich ist es bevorzugt, Beschichtungen zu verwenden, die auch eine bestimmte Funktion erfüllen (funktionale Beschichtungen). Besonders bevorzugt sind die Funktionen "Schmutzabweisung" und "Heißsiegelfähigkeit". Es gibt auch Beschichtungssysteme, die gleichzeitig Schmutz abweisend und heißsiegelfähig sind. Die Beschichtungen können gleichzeitig auch als Träger für zusätzliche Sicherheitsmerkmale verwendet werden. Beispielsweise können Fluoreszenzstoffe beigegeben werden. Natürlich können die Beschichtungen auch eingefärbt werden.

Schmutz abweisende Beschichtungssysteme basieren häufig auf Polyacrylaten oder Polyurethanen. Beispiele hierfür sind Polyacrylate, wie sie beispielsweise von Dianal America Inc. angeboten werden, z. B. BR-115, und aus einem Polyesterpolyol und einem Vernetzer auf Isocyanatbasis erzeugte Polyurethane.

Heißsiegelfähige Beschichtungen sind beispielsweise auch Methylmethacrylate wie EX-8195 und EX-8196 (Coim S.p.A.).

Besonders bevorzugt sind Polyamide. Polyamide werden als Schmelzkleber eingesetzt und sind dafür bekannt, dass sie schwer überbeschichtbar sind. Sie besitzen gute Schmutz abweisende Eigenschaften, die durch Zugabe geeigneter Additive wie beispielsweise Silikone und Fluortenside noch weiter verbessert werden können. Soll ein Polyamid allerdings nur als Klebstoff verwendet werden und mit einer zusätzlichen Schmutz abweisenden Beschichtung überbeschichtet werden, ist es bevorzugt, die Oberfläche der Polyamidschicht mit einer gewissen Oberflächenrauheit aufzutragen.

In dem nachfolgenden Ausführungsbeispiel wird gezeigt, wie lediglich durch Testen verschiedener Rakel beim Auftragen der Beschichtung auf Grundkörperlinsen in einfacher Weise funktionsfähige Verbundkörperlinsen erhalten werden können. Getestet wurden drei verschiedene Lacke: Zaponlack (Roth) auf der Basis von Nitrocellulose (sehr gute Verlaufseigenschaften), Dynapol L206 (Evonik) mit 10% Festkörper (ein Polyesterharz mit guten Haftungseigenschaften, auch als Heißsiegellack einsetzbar) und Laroflex MP45 (BASF) mit 20% Festkörper (ein Copolymer aus Vinylchlorid und Vinylisobutylether, gute Haftungseigenschaften, auch als Heißsiegellack einsetzbar). Alle Lacke wurden jeweils auf dieselbe Rasteranordnung von Grundkörperlinsen aufgetragen, wobei die auftragbaren Schichtdicken 6 µm (gelbes Rakel), 12 µm (rotes Rakel) und 24 µm (grünes Rakel) betrugen. Bewertet wurden die Abbildungseigenschaften (Schärfe, Kontrast) der erhaltenen Verbundkörperlinsen. Dabei bedeutet "--" schlechte Abbildungseigenschaften, "O" befriedigende Abbildungseigenschaften, "+" gute Abbildungseigenschaften, und "++" sehr gute Abbildungseigenschaften.

Wie aus der Tabelle ersichtlich ist, konnte mit den Grundkörperlinsen alleine keine gute Darstellung erhalten werden. Verbundkörperlinsen mit Zaponlack als Ergänzungskörper führten jedoch zu einer sehr guten Darstellung sowohl bei Schichtdicken von 12 µm als auch von 24 µm. Verbundkörperlinsen mit Dynapol L206 als Ergänzungskörper führten zu einer guten Darstellung im Falle von Schichtdicken von 6 µm und 12 µm, und Verbundkörperlinsen mit Laroflex MP45 als Ergänzungskörper führten zu einer sehr guten Darstellung bei einer Schichtdicke von 12 µm. Bei den vorstehenden Angaben handelt es sich jeweils um die Nass-Schichtdicken.

**Tabelle**

| Beschichtung | Zaponlack (Roth) | Dynapol L206 (Evonik) 10% FK | Laroflex MP45 (BASF) 20% FK | |
|---|---|---|---|---|
| Keine | -- | -- | -- | |
| Gelbes Rakel | ○ | + | ○ | |
| Rotes Rakel | ++ | + | ++ | |
| Grünes Rakel | ++ | -- | ○ | |

Die vorliegende Erfindung betrifft somit in erster Linie mikrooptische Betrachtungselemente, deren Mikrofokussierelemente Verbundkörper mit einer integralen funktionalen Beschichtung sind, wobei die Soll-Fokuslänge und die sonstigen Abbildungseigenschaften der Mikrofokussierelemente erst durch die funktionale Beschichtung erreicht wird. Diese mikrooptischen Betrachtungsanordnungen werden mit Mikrostrukturanordnungen kombiniert, wobei in grundsätzlich bekannter Weise mikrooptische Darstellungsanordnungen entstehen, beispielsweise Moire-Vergrößerungsanordnungen oder Modulo-Vergrößerungsanordnungen. Mikrostrukturanordnungen und ihre Herstellung sind grundsätzlich bekannt, beispielsweise aus der

WO 2008/000350 A1. Weitere Verfahren sind unter anderem offenbart in der DE 10 2007 007 914 A1.

Eine mikrooptische Darstellungsanordnung bildet, alleine oder in Kombination mit einem oder mehreren anderen Sicherheitsmerkmalen, ein Sicherheitselement. Sicherheitselemente werden auf ein zu sicherndes Wertdokument aufgebracht oder in ein zu sicherndes Wertdokument eingebracht. Alternativ kann die mikrooptische Darstellungsanordnung auch unmittelbar auf ein zu sicherndes Wertdokument aufgebracht oder in ein zu sicherndes Wertdokument eingebracht werden. Außer Wertdokumenten können selbstverständlich auch andere Gegenstände, beispielsweise beliebige Datenträger, gesichert werden.

Hinsichtlich verschiedener Ausführungsformen der mikrooptischen Darstellungsanordnungen, insbesondere hinsichtlich der Rasteranordnung der fokussierenden Elemente (Mikrolinsen) und der mikroskopischen Strukturen (Mikromotivelemente), hinsichtlich der geometrischen Gestalt der Mikrolinsen und der mikroskopischen Strukturen, hinsichtlich Schichten und Schichtfolgen, und insbesondere auch hinsichtlich der erzielten Effekte wird auf die Schriften WO 2006/087138 A1, DE 10 2006 029 852 A1 und DE 10 2005 062 132 A1 verwiesen, deren Offenbarungsgehalt insoweit zum Offenbarungsgehalt der vorliegenden Anmeldung gemacht wird.

Die mikrooptischen Darstellungsanordnungen haben bevorzugt Dicken im Bereich von etwa 20 µm bis 50 µm, bei einer Trägerfoliendicke im Bereich von 5 µm bis 25 µm. Der Durchmesser der mikrofokussierenden Elemente und der Durchmesser der Mikrostrukturelemente liegen bevorzugt in derselben Größenordnung und betragen etwa 10 bis 30 µm, bevorzugt etwa 10 bis 25 µm. Die Rasterweiten der Anordnungen der mikrofokussierenden Elemente und der Mikrostrukturen liegen bevorzugt nur geringfügig über dem Durchmesser der mikrofokussierenden Elemente. Die Ausdehnung lang gestreckter Zylinderlinsen und lang gestreckter Mikrostrukturelemente beträgt in Längsrichtung bevorzugt mehr als 300 µm, besonders bevorzugt mehr als 500 µm und insbesondere mehr als 2 mm.

Nachfolgend wird die vorliegende Erfindung anhand einiger beispielhafter Figuren erläutert. Die dargestellten Ausführungsformen sind als rein veranschaulichend, keinesfalls beschränkend zu verstehen. Zur besseren Anschaulichkeit wurde in den Figuren auf eine maßstabs- und proportionsgetreue Darstellung verzichtet. Insbesondere kann aus den in den Figuren dargestellten Linsenkrümmungen und Abständen zwischen Linsen und Mikrostrukturen nicht auf in realen mikrooptischen Darstellungsanordnungen tatsächlich vorliegende Linsenkrümmungen und Abstände zwischen Linsen und Mikrostrukturen geschlossen werden. Gleiche Bezugsziffern bezeichnen gleiche oder ähnliche Elemente.

In den Zeichnungen zeigen:
- Figur 1: eine schematische Darstellung einer Banknote mit einem Fenstersicherheitsfaden und einem aufgeklebten Transferelement,
- Figur 2: schematisch den Schichtaufbau einer mikrooptischen Darstellungsanordnung im Querschnitt,
- Figur 3: schematisch den Schichtaufbau einer mikrooptischen Darstellungsanordnung mit funktionaler Beschichtung gemäß Stand der Technik im Querschnitt,
- Figur 4: eine Darstellung wie in Figur 2, dargestellt zum direkten Vergleich mit dem in Figur 5 und Figur 6 dargestellten Ausgangs- bzw. Endprodukt des erfindungsgemäßen Verfahrens zur Herstellung einer erfindungsgemäßen mikrooptischen Darstellungsanordnung,
- Figur 5: schematisch den Aufbau einer mikrooptischen Darstellungsanordnung, nur noch mit einer Betrachtungsanordnung aus Grundkörperlinsen im Querschnitt,
- Figur 6: eine erfindungsgemäße Darstellungsanordnung mit einer Betrachtungsanordnung mit Verbundkörperlinsen im Querschnitt,
- Figur 7A bis 7C: einen Herstellungsprozess einer erfindungsgemäßen mikrooptischen Betrachtungsanordnung mit Grundkörperlinsen aus Photoresistmaterial, wobei

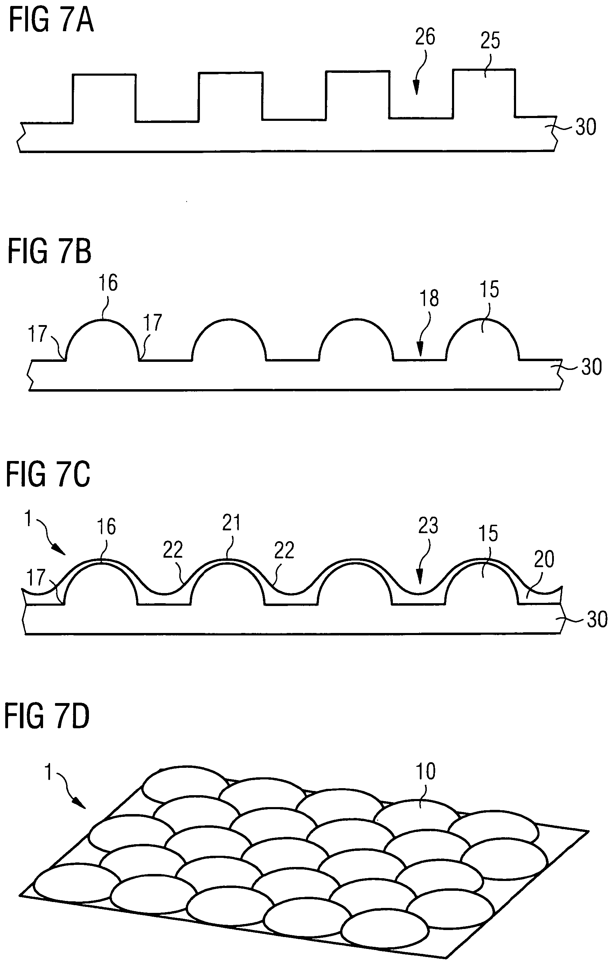

- Figur 7A: eine Rasteranordnung von Grundkörperlinsen-Vorformen im Querschnitt,
- Figur 7B: eine Rasteranordnung von Grundkörperlinsen im Querschnitt, und
- Figur 7C: eine Rasteranordnung von Verbundkörperlinsen im Querschnitt zeigt,
- Figur 7D: die Rasteranordnung von Figur 7C in Aufsicht,

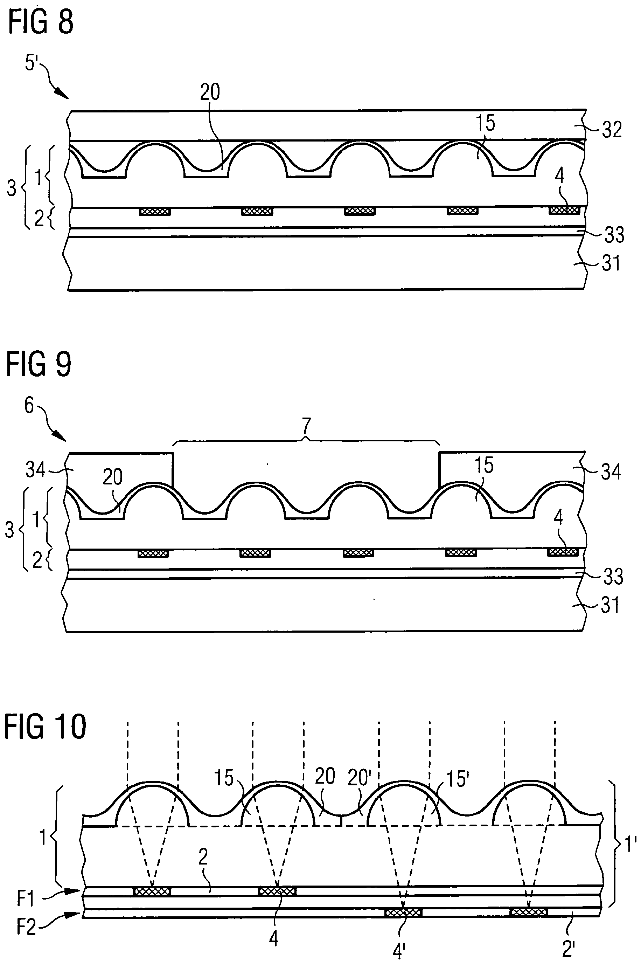

- Figur 8: ein Wertdokument mit erfindungsgemäßer mikrooptischer Darstellungsanordnung und aufkaschierter Kunststofffolie im Querschnitt,
- Figur 9: ein Wertdokument mit einem Fenstersicherheitsfaden mit erfindungsgemäßer mikrooptischer Darstellungsanordnung im Querschnitt, und
- Figur 10: eine erfindungsgemäße mikrooptische Darstellungsanordnung mit zwei Mikrostrukturanordnungen und entsprechend fokussierenden Verbundkörperlinsen im Querschnitt.

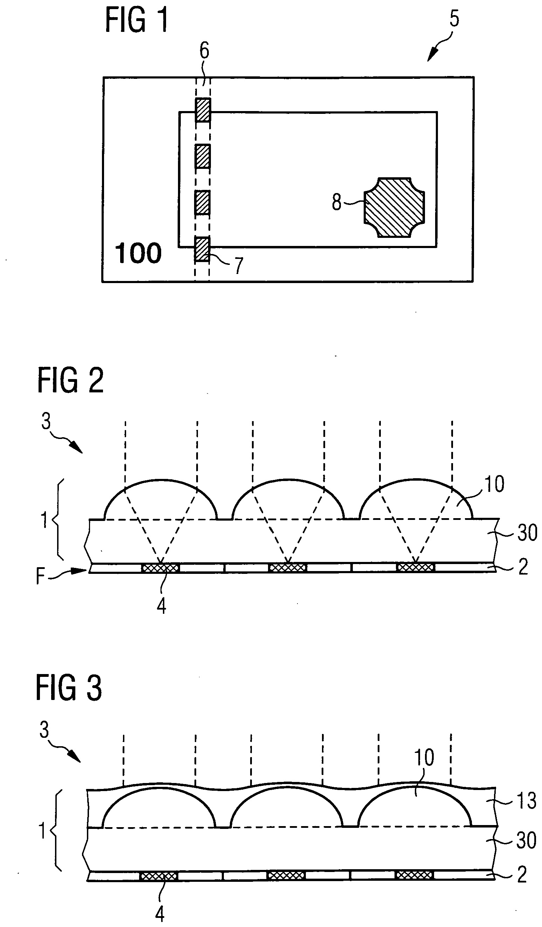

Figur 1 zeigt eine schematische Darstellung einer Banknote 5 mit zwei Sicherheitselementen 6 und 8, wobei das Sicherheitselement 6 einen Fenstersicherheitsfaden darstellt, der in Fensterbereichen 7 der Banknote 5 hervortritt, während er in den dazwischen liegenden Bereichen im Inneren der Banknote 5 eingebettet ist. Das Sicherheitselement 8 ist ein aufgeklebtes Transferelement beliebiger Form. Das Sicherheitselement 8 kann auch in Form einer Abdeckfolie ausgebildet sein, die über einem Fensterbereich oder einer durchgehenden Öffnung der Banknote angeordnet ist. Das Sicherheitselement kann für eine Betrachtung in Aufsicht, Durchsicht oder für eine Betrachtung sowohl in Aufsicht als auch in Durchsicht ausgelegt sein. Bei Folien-Sicherheitselementen, die über einer durchgehenden Öffnung angebracht werden sollen, sind auch Darstellungsanordnungen sehr attraktiv, bei denen beiderseits der Mikrostrukturanordnung Linsenanordnungen vorgesehen sind.

Sowohl der Fenstersicherheitsfaden 6 als auch das Transferelement 8 können mikrooptische Betrachtungsanordnungen gemäß der vorliegenden Erfindung enthalten, beispielsweise Modulo-Vergrößerungsanordnungen oder Moire-Vergrößerungsanordnungen.

Figur 2 zeigt schematisch den Schichtaufbau einer mikrooptischen Darstellungsanordnung 3, wie sie sowohl in einem Fenstersicherheitsfaden als auch in einem Transferelement enthalten sein kann. Gezeigt sind nur die für die Erläuterung des Funktionsprinzips erforderlichen Teile des Schichtaufbaus. Im einfachsten Fall ist die mikrooptische Darstellungsanordnung 3 gleichzeitig das vollständige Sicherheitselement. Das Sicherheitselement enthält einen Träger 30 in Form einer transparenten Kunststofffolie, beispielsweise einer etwa 20 µm dicken Folie aus Polyethylenterephthalat (PET).

Die Oberseite der Trägerfolie 30 ist mit einer rasterförmigen Anordnung von Mikrolinsen 10 versehen, die auf der Oberfläche der Trägerfolie ein zweidimensionales Gitter mit einer vorgewählten Symmetrie bilden, beispielsweise einer hexagonalen Symmetrie oder der Symmetrie eines Parallelogramm-Gitters.

Der Abstand benachbarter Mikrolinsen 10 ist vorzugsweise so gering wie möglich gewählt, um eine möglichst hohe Flächendeckung und damit eine kontrastreiche Darstellung zu gewährleisten. Die Mikrolinsen 10 können beispielsweise sphärisch oder asphärisch sein und sind mit typischen Durchmessern im Bereich von etwa 5 µm bis 50 µm mit bloßem Auge nicht zu erkennen. Die Mikrolinsen 10 und der Träger 30 bilden zusammen eine mikrooptische Betrachtungsanordnung 1 zur Betrachtung einer Mikrostrukturanordnung 2.

Die Mikrostrukturanordnung 2 ist auf der Unterseite der Trägerfolie 30 angeordnet und weist ein in eine Mehrzahl von Zellen eingeteiltes Motivbild mit Mikrostrukturelementen bzw. Motivbildelementen 4 auf, wobei sich die Mikrostrukturanordnung, um eine scharfe Abbildung zu gewährleisten, in der Fokusebene F der Mikrolinsen 10 befinden muss. Dementsprechend sind die optische Dicke der Trägerfolie 30 und die Brennweite bzw. Fokuslänge der Mikrolinsen 10 so aufeinander abgestimmt, dass sich die Mikrostrukturanordnung 2 etwa im Abstand der Linsenbrennweite befindet. Die Trägerfolie 30 bildet somit eine optische Abstandsschicht, die einen gewünschten, konstanten Abstand der Mikrolinsen 10 und der Mikrostrukturschicht bzw. Motivschicht 2 mit dem Motivbild gewährleistet. Zur Erzielung eines Vergrößerungseffekts befinden sich die Mikrostrukturelemente 4 jeweils nicht exakt im Brennpunkt der Mikrolinsen 10. Vielmehr sind die Rasteranordnungen der Mikrolinsen 10 und der Mikrostrukturelemente 4 geringfügig gegeneinander versetzt. Der Strahlengang parallel auf den Mikrolinsen 10 einfallender Lichtstrahlen und ihre Fokussierung auf die Mikrostrukturelemente 4 ist mit gestrichelten Linien angedeutet.

Figur 3 zeigt dieselbe mikrooptische Darstellungsanordnung wie in Figur 2, jedoch mit einer funktionalen Schicht 13, beispielsweise einem heißsiegelfähigen Klebstoff oder einer Schmutz abweisenden Beschichtung. Die Beschichtung ist ausgeführt wie im Stand der Technik üblich, d.h. sie bildet eine nahezu ebene Oberfläche über den Mikrolinsen 10, indem sie die Zwischenräume zwischen den Linsen 10 im Wesentlichen vollständig auffüllt. Bei einer derartigen Beschichtung wird die Fokusebene der Mikrolinsen 10 deutlich verschoben, oder es findet überhaupt keine saubere Fokussierung mehr statt, wie in Figur 3 dargestellt. Jedenfalls ist es nicht mehr möglich, eine scharfe Abbildung der Mikromotivelemente 4 zu erhalten. In Figur 3 ist dies dadurch angedeutet, dass zwar parallel einfallende Lichtstrahlen mit gestrichelten Linien, aber keine fokussierten Strahlen dargestellt sind.

Abweichend vom Stand der Technik führt jedoch bei der vorliegenden Erfindung das Vorsehen einer funktionalen Beschichtung nicht zu einer unscharfen oder kaum mehr erkennbaren Abbildung, wie die folgenden Figuren zeigen.

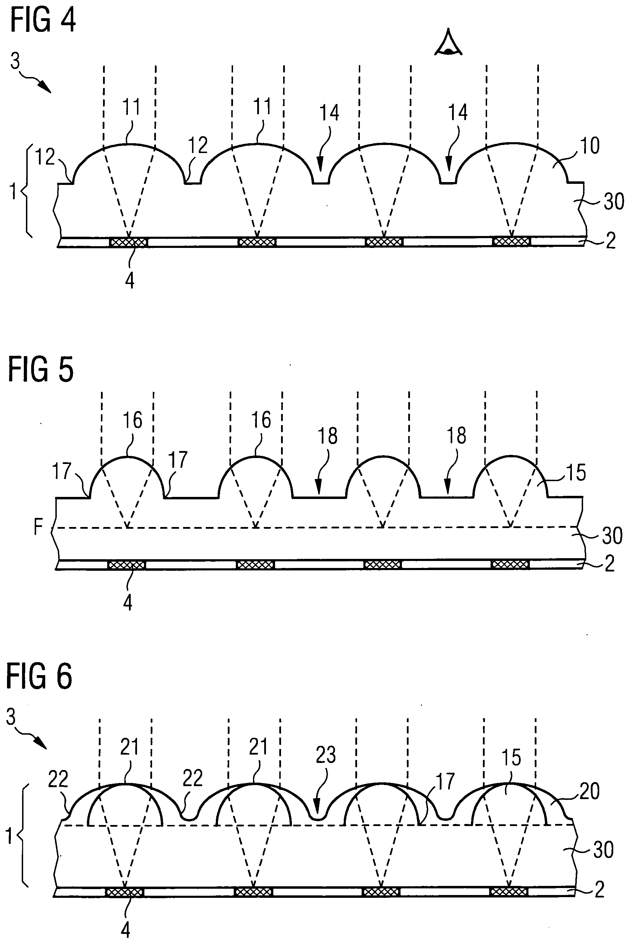

In Figur 4 ist, schematisch und im Querschnitt, eine mikrooptische Darstellungsanordnung 3 gezeigt, die Mikromotivelemente 4 abbildet. Bezeichnet sind jeweils nur die zur Erläuterung des erfindungsgemäßen Verfahrens wesentlichen Bestandteile der Darstellungsanordnung 3. Die Betrachtungsanordnung 1 besteht aus einem Träger 30 und Mikrofokussierelementen (Linsen) 10. Die Linsen 10 sind in einem Raster angeordnet, und jede Linse hat eine gekrümmte Oberfläche mit einem Scheitel 11 oben und einer Basis 12, d.h. einem umlaufenden Rand 12, unten. "Oben" bezeichnet dabei die bei Betrachtung der Darstellungsanordnung einem Betrachter am nächsten liegenden Stellen der Linsen, und "unten" bezeichnet die von einem Betrachter am weitesten entfernt gelegenen Stellen der Linsen. Zwischen benachbarten Linsen befinden sich jeweils Zwischenräume 14, die möglichst klein sein sollten, um eine gute Abbildungsqualität zu gewährleisten. Wie durch die gestrichelten Linien dargestellt ist, fokussieren die Linsen 10 in einer Fokusebene, in der sich die Mikrostrukturanordnung 2 mit den Mikrostrukturelementen 4 befindet. Die Darstellungsanordnung 3 hat keine funktionale Beschichtung. Würde sie mit einer derartigen Beschichtung ausgestattet werden, würde sich die Fokusebene der Linsen 10 verschieben und läge nicht mehr in der Ebene der Mikrostrukturanordnung 2 mit der Folge, dass die Mikrostrukturelemente 4 nicht mehr scharf abgebildet werden würden. Erfindungsgemäß wird nun eine mikrooptische Darstellungsanordnung wie in Figur 4 hergestellt, wobei die Linsen 10 jedoch mit einer funktionalen Beschichtung beschichtet sind.

Zur Herstellung der erfindungsgemäßen Darstellungsanordnung geht man von einer rasterförmigen Anordnung von Mikrofokussierelement-Vorformen aus, wie sie beispielsweise in Figur 5 dargestellt ist. Zur besseren Veranschaulichung der im Ausführungsbeispiel vorhandenen fokussierenden Eigenschaften der Vorformen ist auch die Mikrostrukturanordnung 2 mit den abzubildenden Mikrostrukturelementen 4 dargestellt, aber es kann natürlich auch zuerst lediglich eine Betrachtungseinrichtung 1 hergestellt werden und diese dann später mit einer Mikrostrukturanordnung 2 zu der Darstellungsanordnung 3 kombiniert werden. Die Rasteranordnung der Vorformen 15 ist dieselbe wie die Rasteranordnung der späteren Linsen 10, d.h. das Raster weist dieselbe Symmetrie auf, und die Vorformen 15 befinden sich an denselben Positionen wie die späteren Linsen 10. Die Vorformen 15 unterscheiden sich jedoch hinsichtlich ihrer lokalen Krümmungsradien deutlich von den Linsen 10, d.h. sie sind im gezeigten Ausführungsbeispiel im Wesentlichen sphärisch mit kleinen, etwa gleichen Krümmungsradien am Scheitel 16 und an der Basis 17. Außerdem sind die Zwischenräume 18 zwischen benachbarten Vorformen deutlich größer als die Zwischenräume 14 zwischen den Mikrolinsen 10. Die Vorformen 15 haben Brennpunkte, die in einer Fokusebene F (mit gestrichelten Linien angedeutet) liegen, wobei die Fokusebene F nicht in der Ebene der Mikrostrukturanordnung 2 liegt. Vielmehr sind die Brennweiten der Linsen-Vorformen 15 deutlich kürzer als die Brennweiten der Linsen 10, weshalb die Mikrostrukturelemente 4 nicht deutlich abgebildet werden können. Alternativ können die Vorformen auch durch Elemente gebildet sein, die keine fokussierende Wirkung aufweisen.

Eine Anordnung wie sie in Figur 5 dargestellt ist, dient erfindungsgemäß als Ausgangsprodukt zur Herstellung einer scharf fokussierenden Darstellungsanordnung mit funktionaler Beschichtung, wie sie in Figur 6 dargestellt ist. Es ist ersichtlich, dass die in Figur 6 veranschaulichte Darstellungsanordnung 3 insoweit der Anordnung von Figur 5 entspricht, als sie ebenfalls Linsen-Vorformen 15 auf einem Träger 30, und eine Mikrostrukturanordnung 2 mit Mikrostrukturelementen 4 besitzt. Bei der erfindungsgemäßen Darstellungsanordnung stellen die Linsen-Vorformen 15 jedoch lediglich Grundkörper dar, die als Aufbauhilfe zur Herstellung der eigentlichen Linsen dienen.

Zur Herstellung der eigentlichen Linsen wird eine funktionale Beschichtung, beispielsweise eine Schmutz abweisende Beschichtung oder eine Klebstoffschicht, auf die Rasteranordnung der Grundkörper 15 aufgetragen und, je nach Art der Beschichtung, beispielsweise UV-gehärtet oder einfach getrocknet, gegebenenfalls unterstützt durch Erwärmung. Die Beschichtung ergänzt die Grundkörper 15 zu fertigen Linsen 10, d.h. sie bildet Linsen-Ergänzungskörper 20 aus. Die Form der Ergänzungskörper 20 ist abhängig von der Art und Viskosität des Beschichtungsmaterials und gegebenenfalls von den Auftragungsbedingungen. Beispielsweise führt eine Temperaturerhöhung beim Auftragen typischerweise zu einer Verringerung der Viskosität des Beschichtungsmaterials. In der in Figur 6 veranschaulichten Ausführungsform wurde ein vergleichsweise niedrigviskoses Beschichtungsmaterial verwendet. Das Beschichtungsmaterial ist zu einem sehr großen Teil in die Zwischenräume 18 zwischen den Grundkörpern 15 geflossen, während sich an den Scheitelpunkten 16 der Vorformen 15 nahezu kein Beschichtungsmaterial befindet. Den aus den Grundkörpern 15 und den Ergänzungskörpern 20 gebildeten Verbundlinsen lässt sich ein größerer Krümmungsradius zuweisen als den Grundkörpern 15. Die Verbundlinsen sind also gegenüber den Grundkörpern deutlich abgeflacht, was zu einer deutlich längeren Brennweite gegenüber den Grundformen 15 führt. Die Verbundlinsen fokussieren nun in der Ebene der Mikrostrukturanordnung 2 mit den Mikrostrukturelementen 4. Außerdem sind durch das teilweise Auffüllen der Zwischenräume 18 zwischen den Grundkörpern 15 durch die Ergänzungskörper 20 die Zwischenräume 23 zwischen benachbarten Verbundlinsen relativ klein, d.h. die Rasteranordnung der Verbundlinsen ist gut flächendeckend. Daher führt die Betrachtungsanordnung 1 mit den Verbundlinsen zu einer scharfen und kontrastreichen Abbildung der Mikrostrukturelemente 4.

Zur Herstellung von Linsenstrukturen für mikrooptische Betrachtungsanordnungen sind auch Verfahren verbreitet, bei denen zunächst Zylinderstrukturen aus einem Photoresistmaterial hergestellt werden, und diese Zylinderstrukturen anschließend aufgeschmolzen werden. Die Herstellung der Zylinderstrukturen erfolgt in an sich bekannter Weise durch eine geeignet strukturierte Abdeckung eines Photoresistmaterials auf einem Träger, Belichten und Entwickeln, wobei nach dem Entwickeln Zylinderstrukturen zurückbleiben. Eine derartige Anordnung ist in Figur 7A dargestellt. Die Zylinderstrukturen 25 sind auf einem Träger in einer Rasteranordnung angeordnet, jeweils mit Zwischenräumen 26 zwischen benachbarten Zylinderstrukturen 25. Die Rastersymmetrie und die Positionen der Zylinderstrukturen 25 im Raster entsprechen der Rastersymmetrie des herzustellenden Verbundkörperlinsenrasters bzw. den Positionen der herzustellenden Verbundkörperlinsen im Verbundkörperlinsenraster. Durch Aufschmelzen der Zylinderstrukturen 25 bilden sich kleine Tröpfchen mit sphärischer Oberfläche, die nach dem Abkühlen sphärische Linsen ergeben. Auf diese Weise wird ein Raster von Grundkörperlinsen 15 gebildet, wie es in Figur 7B dargestellt ist. Ein solches Raster von Grundkörperlinsen 15 kann auch dadurch erzeugt werden, dass das nach vorstehendem Verfahren hergestellte Grundkörper-linsenraster galvanisch abgeformt wird und mit dem daraus erhaltenen Prägemaster entsprechenden Grundkörperlinsen beispielsweise in thermoplastischen Lack geprägt werden.

Dieses Raster von Grundkörperlinsen entspricht dem in Figur 5 dargestellten Raster, wie es beispielsweise durch Prägen in thermoplastischen oder strahlenhärtbaren Lack erhalten werden kann. Da die Grundkörper 15 an der Basis 17 einen größeren Durchmesser aufweisen als ihre Vorformen, die Zylinder 25, sind die Zwischenräume 18 zwischen den Grundkörpern 15 kleiner als die Zwischenräume 26 zwischen den Zylindern 25. Dies muss bei der Herstellung der zylindrischen Grundkörper-Vorformen 25 berücksichtigt werden. Dennoch müssen die Zwischenräume 18 relativ groß sein, um ein Zusammenfließen der Tröpfchen aus geschmolzenem Resistmaterial zu verhindern, und außerdem können auf diese Weise nur sphärische Linsen erhalten werden. Sowohl die relativ großen Zwischenräume als auch die sphärische Gestalt der Linsen sind nachteilig, da sie zu weniger scharfen und kontrastärmeren Abbildungen führen als Rasteranordnungen mit hoher Flächendeckung und mit asphärischen Linsen. Hier bietet die vorliegende Erfindung die Möglichkeit, nicht nur die Fokuslängen der Linsen einzustellen, sondern auch gezielt deren Abbildungseigenschaften zu verbessern. Dies zeigt ein unmittelbarer Vergleich der Figuren 7B und 7C.

Die in Figur 7C dargestellte Betrachtungsanordnung 1 zeigt die Rasteranordnung von Grundkörpern 15 von Figur 7B nach der Beschichtung mit einer funktionalen Beschichtung, d.h. nach der Herstellung der Ergänzungskörper 20. Die Zwischenräume zwischen benachbarten Verbundkörperlinsen sowie ihre Krümmungsradien werden nun durch die Zwischenräume zwischen den Ergänzungskörpern und die Krümmungsradien der Ergänzungskörper bestimmt. Die Zwischenräume 23 zwischen benachbarten Ergänzungskörpern (und damit zwischen benachbarten Verbundkörperlinsen) sind deutlich kleiner als die Zwischenräume 18 zwischen benachbarten Grundkörpern 15, und die Krümmungsradien an den Scheitelpunkten 21 der Ergänzungskörper wurden gegenüber den Krümmungsradien an den Scheitelpunkten 16 der Grundkörper nur geringfügig vergrößert, während die Krümmungsradien an der Basis 22 der Ergänzungskörper (und damit der Verbundkörperlinsen) gegenüber den Krümmungsradien an der Basis 17 der Grundkörper stark vergrößert wurden. Die Verbundkörperlinsen haben daher eine vorteilhafte asphärische Gestalt.

Figur 7D zeigt die in Figur 7C dargestellte Betrachtungsanordnung 1 in Aufsicht. Wie ersichtlich ist, gibt es kaum Zwischenräume zwischen den Verbundkörperlinsen 10, was zu sehr guten Abbildungseigenschaften der Betrachtungsanordnung 1 führt.

In den Figuren 6 und 7C sind jeweils Grundkörper 15 mit identischen Abmessungen dargestellt. Außerdem sind Ergänzungskörper 20, die sich über die gesamte Rasteranordnung erstrecken und aus lediglich einer einzigen Schicht bestehen, dargestellt. Es ist allerdings ebenso möglich, Rasteranordnungen mit unterschiedlich gestalteten Grundkörpern zu verwenden, und Ergänzungskörper aus zwei oder mehr Schichten aufzubauen. Diese Schichten können gleich oder verschieden sein und sich über die gesamte Anordnung oder jeweils nur über Teilbereiche der Anordnung erstrecken. Ebenso ist es möglich, nur einen Teilbereich einer Betrachtungsanordnung auf die erfindungsgemäße Art herzustellen, und einen anderen Teilbereich von vornherein mit Linsen der richtigen Fokuslänge auszustatten. Verfahrensmäßig einfacher, und daher bevorzugt, ist es, eine Betrachtungsanordnung über ihre gesamte Fläche mit identischen Grundkörpern 15 auszustatten, und auch die Beschichtungen vollflächig vorzunehmen.

Figur 8 zeigt eine Banknote 5' mit einer erfindungsgemäßen Darstellungsanordnung 3 im Querschnitt. Die Darstellungsanordnung 3 besteht aus der Betrachtungsanordnung 1 mit Verbundkörperlinsen aus Grundkörpern 15 und Ergänzungskörpern 20, und der Mikrostrukturanordnung 2 mit Mikrostrukturelementen 4. Die Darstellungsanordnung 3 ist mittels einer Klebstoffschicht 33 auf eine Trägerschicht 31 aus Papier aufgeklebt. Die Ergänzungskörper 20 werden in diesem Fall von einer heißsiegelfähigen Klebstoffschicht gebildet, mit deren Hilfe eine Kunststoff-Kaschierfolie 32 aufkaschiert ist. Vor dem Aufkaschieren der Kunststofffolie fokussieren die Verbundkörperlinsen noch nicht in der Ebene der Mikrostrukturelemente 4. Die Verbundkörperlinsen erhalten ihre korrekte Form mit der gewünschten Soll-Fokuslänge erst durch das Schmelzen und Fließen des Klebstoffs beim Aufkaschieren der Kunststofffolie 32, gefolgt von Erstarren der Klebstoffschicht zu dem Ergänzungskörper 20.

Figur 9 zeigt einen in eine Banknote eingebrachten Fenstersicherheitsfaden 6. Der Sicherheitsfaden besteht in der gezeigten Ausführungsform lediglich aus der Darstellungsanordnung 3. Diese ist mittels der Klebstoffschicht 33 mit dem Banknotenpapier 31 verklebt. An der Oberseite der Darstellungsanordnung 3, d.h. an der Seite der Linsen, ist der Sicherheitsfaden teilweise von Fensterstegen 34 bedeckt, und teilweise ist er in Fensterbereichen 7 sichtbar. In der dargestellten Ausführungsform weisen die Verbundkörperlinsen Ergänzungskörper 20 aus einer funktionalen Beschichtung auf, die sowohl Schmutz abweisende als auch verklebende Eigenschaften hat, beispielsweise aus einem Polyamid. Vor dem Einbringen in die Banknote fokussieren die Mikrolinsen noch nicht in der Ebene der Mikrostrukturelemente 4, liefern also keine scharfe Darstellung. Erst durch die Temperaturerhöhung beim Verkleben mit den Fensterstegen 34 erhalten die Ergänzungskörper 20 ihre endgültige Form, und damit die Verbundkörperlinsen ihre endgültige Fokuslänge. Sie liefern dann eine scharfe Abbildung der Mikrostrukturelemente 4.

Figur 10 zeigt eine Darstellungsanordhung mit zwei Mikrostrukturanordnungen 2, 2'. Die Mikrostrukturanordnungen 2, 2' besitzen Mikrostrukturelemente 4, 4', und deren scharfe Abbildung erfordert Mikrolinsen mit unterschiedlicher Fokuslänge. Erfindungsgemäß können auf einem Trägermaterial gleichzeitig zwei verschiedene Betrachtungsanordnungen 1, 1' mit Linsen, die in einer Fokusebene F1 fokussieren, und mit Linsen, die in einer Fokusebene F2 fokussieren, ausgebildet werden, indem man von verschiedenen Grundkörpern 15,15' ausgeht, und/oder verschiedene Ergänzungskörper 20, 20' ausbildet. In der dargestellten Ausführungsform fokussieren die Verbundkörperlinsen der Betrachtungsanordnung 1 in der Ebene der Mikrostrukturanordnung 2, und die Verbundkörperlinsen der Betrachtungsanordnung 1' fokussieren in der Ebene der Mikrostrukturanordnung 2'.

## Patentansprüche

1. Verfahren zur Herstellung einer mikrooptischen Darstellungsanordnung aufweisend eine mikrooptische Betrachtungsanordnung (1) mit einer Mehrzahl von Mikrofokussierelementen (10), die einen Grundkörper (15) und einen Ergänzungskörper (20) aufweisen, eine vorgegebene Soll-Fokuslänge haben und in einem Betrachtungsraster angeordnet sind, und eine Mikrostrukturanordnung (2) mit einer Mehrzahl von Mikrostrukturelementen (4), die ein Mikrostrukturraster bilden, wobei die Mikrostrukturanordnung (2) durch die mikrooptische Betrachtungsanordnung (1) betrachtet werden kann, wobei das Verfahren folgende Schritte aufweist:
- Herstellen einer rasterförmigen Anordnung von Grundkörpern (15) in Form von Mikrofokussierelement-Vorformen, wobei die Herstellung der rasterförmigen Anordnung von Grundkörpern erfolgt
- durch Prägen der Grundkörper in eine thermoplastische Folie oder in eine mit einem strahlenhärtbaren Lack beschichtete Folie mit nachfolgendem Bestrahlen, oder
- durch Erzeugen zylindrischer Grundkörper-Vorformen aus einem Photoresistmaterial und anschließendes Schmelzen der Grundkörper-Vorformen zu sphärischen Grundkörpern,
- Kombinieren der rasterförmigen Anordnung von Grundkörpern mit der Mikrostrukturanordnung (2),
und
- Ausbilden von Ergänzungskörpern (20) auf dem Grundkörperraster, oder zumindest auf einem sich über mehrere Grundkörper (15) erstreckenden Teilbereich des Grundkörperrasters, durch Beschichten des Grundkörperrasters mit mindestens einer Beschichtung, wobei die Ergänzungskörper (20) die Grundkörper (15) zu den Mikrofokussierelementen (10) mit der vorgegebenen Soll-Fokuslänge ergänzen, so dass die Mikrofokussierelemente (10) in der Ebene der Mikrostrukturanordnung (2) fokussieren,
wobei jeder Grundkörper (15) eine gekrümmte Oberfläche mit einem Scheitel (16) oben und einer Basis (17) unten aufweist, wobei allen Punkten auf der Oberfläche lokale Krümmungsradien zugeordnet sind, die gleich oder verschieden sein können, und wobei die mindestens eine Beschichtung die Grundkörper derart ergänzt, dass die Mikrofokussierelemente (10) zumindest im Bereich ihres Scheitels (21) größere lokale Krümmungsradien aufweisen als die Grundkörper (15).

2. Verfahren nach Anspruch 1, **dadurch gekennzeichnet, dass** die Grundkörper eine fokussierende Wirkung aufweisen und mit einer Fokuslänge vorliegen, die von der Soll-Fokuslänge verschieden ist.

3. Verfahren nach Anspruch 1 oder 2, **dadurch gekennzeichnet, dass** die Ausbildung der Ergänzungskörper durch Auftragen von mindestens zwei Beschichtungen erfolgt, die gleich oder verschieden sein können, wobei die Beschichtungen auf gleiche oder verschiedene Bereiche des Grundkörperrasters aufgetragen werden können.

4. Verfahren nach einem der Ansprüche 1 bis 3, **dadurch gekennzeichnet, dass** zur Ausbildung der Ergänzungskörper die Beschichtung oder mindestens eine der Beschichtungen verformt wird, bevorzugt durch Erwärmen, wodurch die Mikrofokussierelemente die vorgegebene Soll-Fokuslänge erhalten.

5. Mikrooptische Darstellungsanordnung (3) aufweisend eine mikrooptische Betrachtungsanordnung (1) mit einer Mehrzahl von Mikrofokussierelementen (10), die eine vorgegebene Soll-Fokuslänge haben und ein Betrachtungsraster bilden, und eine Mikrostrukturanordnung (2) mit einer Mehrzahl von Mikrostrukturelementen (4), die ein Mikrostrukturraster bilden, wobei die Mikrostrukturanordnung (2) durch die mikrooptische Betrachtungsanordnung(1) betrachtet werden kann, wobei die mikrooptische Betrachtungsanordnung (1) **dadurch gekennzeichnet ist, dass**
- die Mikrofokussierelemente (10) jeweils einen Grundkörper (15) und einen Ergänzungskörper (20) aufweisen, wobei
- die Grundkörper (15) Mikrofokussierelement-Vorformen sind, die in einem Grundkörperraster angeordnet sind, wobei die rasterförmige Anordnung von Grundkörpern
- durch Prägen der Grundkörper in eine thermoplastische Folie oder in eine mit einem strahlenhärtbaren Lack beschichtete Folie mit nachfolgendem Bestrahlen, oder
- durch Erzeugen zylindrischer Grundkörper-Vorformen aus einem Photoresistmaterial und anschließendes Schmelzen der Grundkörper-Vorformen zu sphärischen Grundkörpern hergestellt ist,
und
- die Ergänzungskörper (20) mindestens eine Beschichtung des Grundkörperrasters, oder zumindest eines sich über mehrere Grundkörper erstreckenden Teilbereichs des Grundkörperrasters, sind, die die Grundkörper (15) zu den Mikrofokussierelementen (10) mit der vorgegebenen Soll-Fokuslänge ergänzen, so dass die Mikrofokussierelemente (10) in der Ebene der Mikrostrukturanordnung (2) fokussieren,
wobei jeder Grundkörper (15) eine gekrümmte Oberfläche mit einem Scheitel (16) oben und einer Basis (17) unten aufweist, wobei allen Punkten auf der Oberfläche lokale Krümmungsradien zugeordnet sind, die gleich oder verschieden sein können, und wobei die mindestens eine Beschichtung die Grundkörper derart ergänzt, dass die Mikrofokussierelemente zumindest im Bereich ihres Scheitels (21) größere lokale Krümmungsradien aufweisen als die Grundkörper (15).

6. Mikrooptische Darstellungsanordnung nach Anspruch 5, **dadurch gekennzeichnet, dass** die Grundkörper eine fokussierende Wirkung aufweisen und mit einer Fokuslänge vorliegen, die von der Soll-Fokuslänge verschieden ist

7. Mikrooptische Darstellungsanordnung nach Anspruch 5 oder 6, **dadurch gekennzeichnet, dass** die Grundkörper in einem Grundkörperraster mit Zwischenräumen zwischen benachbarten Grundkörpern angeordnet sind.

8. Mikrooptische Darstellungsanordnung nach einem der Ansprüche 5 bis 7, **dadurch gekennzeichnet, dass** die Ergänzungskörper aus mindestens zwei Beschichtungen aufgebaut sind, wobei die Beschichtungen gleich oder verschieden sein können und auf dem Grundkörperraster in ähnlicher oder unterschiedlicher Weise verteilt sein können.

9. Mikrooptische Darstellungsanordnung nach einem der Ansprüche 5 bis 8, **dadurch gekennzeichnet, dass** die mindestens eine Beschichtung eine funktionale Beschichtung ist, bevorzugt eine Klebstoffbeschichtung oder eine Schutzbeschichtung, insbesondere eine Schmutz abweisende Beschichtung, oder eine Beschichtung, die sowohl Schmutz abweisend als auch klebefähig ist, und/oder dass die Ergänzungskörper das Grundkörperraster vollständig oder im Wesentlichen vollständig bedecken.

10. Mikrooptische Darstellungsanordnung nach einem der Ansprüche 5 bis 9, **dadurch gekennzeichnet, dass** die mikrooptische Betrachtungsanordnung mindestens zwei verschiedene Mikrofokussierelemente aufweist, die sich dadurch unterscheiden, dass sie verschiedene Grundkörper und/oder verschiedene Ergänzungskörper haben.

11. Sicherheitselement (6, 8) zur Echtheitssicherung eines Datenträgers (5), insbesondere eines Wertdokuments, **dadurch gekennzeichnet, dass** es eine mikrooptische Darstellungsanordnung (3) nach einem der Ansprüche 5 bis 10 oder eine nach einem Verfahren gemäß den Ansprüchen 1 bis 4 erhältliche mikrooptische Darstellungsanordnung (3) aufweist.

12. Datenträger (5), insbesondere ein Wertdokument, **dadurch gekennzeichnet, dass** er eine mikrooptische Darstellungsanordnung (3) nach einem der Ansprüche 5 bis 10 oder eine nach einem Verfahren gemäß den Ansprüchen 1 bis 4 erhältliche mikrooptische Darstellungsanordnung (3) aufweist.

13. Verfahren zur Herstellung eines Datenträgers (5), insbesondere eines Wertdokuments, **dadurch gekennzeichnet, dass** er mit einem Sicherheitselement (6, 8) nach Anspruch 11 ausgestattet wird, und dass die Ergänzungskörper (20) durch Auftragen der mindestens einen Beschichtung auf den Datenträger (5) vervollständigt werden, oder dass die Ergänzungskörper (20) verformt werden, um die Soll-Fokuslänge der Mikrofokussierelemente (10) zu erzeugen.

## Claims

1. A method for manufacturing a micro-optic representation arrangement having a micro-optic viewing arrangement (1) with a plurality of microfocusing elements (10) which have a base body (15) and a supplementary body (20), have a specified target focal length and are arranged in a viewing grid, and a microstructure arrangement (2) with a plurality of microstructure elements (4) that form a microstructure grid, wherein the microstructure arrangement (2) can be viewed through the micro-optic viewing arrangement (1), wherein the method comprises the following steps:
- manufacturing a grid-shaped arrangement of base bodies (15) in the form of microfocusing-element preforms, wherein the manufacturing of the grid-shaped arrangement of base bodies is effected
- by embossing the base bodies into a thermoplastic foil or into a foil coated with a radiation-curing lacquer with following irradiation, or
- by producing cylindrical base-body preforms of a photoresist material and subsequently melting the base-body preforms into spherical base bodies,
- combining the grid-shaped arrangement of base bodies with the microstructure arrangement (2),
and
- forming supplementary bodies (20) on the base-body grid, or at least on a partial region of the base-body grid, which partial region extends over several base bodies (15), by coating the base-body grid with at least one coating, wherein the supplementary bodies (20) supplement the base bodies (15) into the microfocusing elements (10) having the specified target focal length, so that the microfocusing elements (10) focus in the plane of the microstructure arrangement (2),
wherein each base body (15) has a curved surface with a vertex (16) on the top and a basis (17) at the bottom, wherein all the points on the surface are assigned local radii of curvature that can be identical or different and wherein the at least one coating supplements the base bodies such that the microfocusing elements (10) have at least in the region of their vertex (21) larger local radii of curvature than the base bodies (15).

2. The method according to claim 1, **characterized in that** the base bodies have a focusing effect and are present with a focal length that differs from the target focal length.

3. The method according to either of claims 1 or 2, **characterized in that** the formation of the supplementary body is effected by applying at least two coatings, which can be identical or different, wherein the coatings can be applied onto identical or different regions of the base-body grid.

4. The method according to any of claims 1 to 3, **characterized in that** for the formation of the supplementary bodies, the coating or at least one of the coatings is deformed, preferably by heating, thereby the microfocusing elements obtaining the specified target focal length.

5. A micro-optic representation arrangement (3) having a micro-optic viewing arrangement (1) with a plurality of microfocusing elements (10) that have a specified target focal length and form a viewing grid, and a microstructure arrangement (2) having a plurality of microstructure elements (4) that form a microstructure grid, wherein the microstructure arrangement (2) can be viewed through the micro-optic viewing arrangement (1), wherein the micro-optic viewing arrangement (1) is **characterized in that**
- the microfocusing elements (10) respectively have a base body (15) and a supplementary body (20), wherein
- the base bodies (15) are microfocusing-element preforms which are arranged in a base-body grid, wherein the grid-shaped arrangement of base bodies is manufactured
- by embossing the base bodies into a thermoplastic foil or into a foil coated with a radiation-curing lacquer with following irradiation, or
- by producing cylindrical base-body preforms of a photoresist material and subsequently melting the base-body preforms into spherical base bodies,
and
- the supplementary bodies (20) are at least one coating of the base-body grid or of at least a partial region of the base-body grid, which partial region extends over several base bodies, which supplementary bodies supplement the base bodies (15) into the microfocusing elements (10) having the specified target focal length, so that the microfocusing elements (10) focus in the plane of the microstructure arrangement (2),
wherein each base body (15) has a curved surface with a vertex (16) on the top and a basis (17) at the bottom, wherein all the points on the surface are assigned local radii of curvature that can be identical or different and wherein the at least one coating supplements the base bodies such that the microfocusing elements have at least in the region of their vertex (21) larger local radii of curvature than the base bodies (15).

6. The micro-optic representation arrangement according to claim 5, **characterized in that** the base bodies have a focusing effect and are present with a focal length that differs from the target focal length.

7. The micro-optic representation arrangement according to claim 5 or 6, **characterized in that** the base bodies are arranged in a base-body grid with interstices between neighboring base bodies.

8. The micro-optic representation arrangement according to any of claims 5 to 7, **characterized in that** the supplementary bodies are constructed of at least two coatings, wherein the coatings can be identical or different and can be distributed on the base-body grid in similar or different fashion.

9. The micro-optic representation arrangement according to any of claims 5 to 8, **characterized in that** the at least one coating is a functional coating, preferably an adhesive coating or a protective coating, in particular a dirt-repellent coating, or a coating which is dirt-repellent as well as adhesive, and/or that the supplementary bodies cover the base-body grid completely or substantially completely.

10. The micro-optic representation arrangement according to any of claims 5 to 9, **characterized in that** the micro-optic viewing arrangement has at least two different microfocusing elements which differ **in that** they have different base bodies and/or different supplementary bodies.

11. A security element (6, 8) for securing the authenticity of a data carrier (5), in particular of a value document, **characterized in that** it has a micro-optic representation arrangement (3) according to any of claims 5 to 10 or a micro-optic representation arrangement (3) obtainable in accordance with a method according to the claims 1 to 4.

12. A data carrier (5), in particular a value document, **characterized in that** it has a micro-optic representation arrangement (3) according to any of claims 5 to 10 or a micro-optic representation arrangement (3) obtainable in accordance with a method according to the claims 1 to 4.

13. A method for manufacturing a data carrier (5), in particular a value document, **characterized in that** the data carrier is equipped with a security element (6, 8) according to claim 11, and that the supplementary bodies (20) are completed by application of the at least one coating onto the data carrier (5), or that the supplementary bodies (20) are deformed in order to produce the target focal length of the microfocusing elements (10).

## Revendications

1. Procédé de fabrication d'un agencement micro-optique de représentation comprenant un agencement micro-optique d'observation (1) ayant une pluralité de micro-éléments de focalisation (10) qui comportent un corps de base (15) et un corps complémentaire (20), ont une longueur focale nominale prédéterminée et sont agencés en une trame d'observation, et un agencement de micro-structures (2) ayant une pluralité d'éléments de microstructure (4) qui constituent une trame de microstructure, cependant que l'agencement de micro-structures (2) peut être observé à travers l'agencement micro-optique d'observation (1), cependant que le procédé comporte les étapes suivantes :
- fabrication d'un agencement tramé de corps de base (15) sous forme de préformes de micro-éléments de focalisation, cependant que la fabrication de l'agencement tramé de corps de base a lieu
- par gaufrage des corps de base dans une feuille thermoplastique ou dans une feuille revêtue d'un vernis durcissable par rayonnement avec irradiation subséquente, ou
- par génération de préformes cylindriques de corps de base à partir d'un matériau photosensible et fonte ultérieure des préformes de corps de base de manière à obtenir des corps de base sphériques,
- combinaison de l'agencement tramé de corps de base et de l'agencement de micro-structures (2),
et
- formation de corps complémentaires (20) sur la trame de corps de base, ou au moins sur une zone partielle, de la trame de corps de base, s'étendant sur plusieurs corps de base (15), par revêtement de la trame de corps de base avec au moins un revêtement, cependant que les corps complémentaires (20) complètent les corps de base (15) de manière à engendrer les micro-éléments de focalisation (10) ayant la longueur focale nominale prédéterminée, de telle sorte que les micro-éléments de focalisation (10) focalisent dans le plan de l'agencement de micro-structures (2),
cependant que chaque corps de base (15) présente une surface courbée ayant un vertex (16) en haut et une base (17) en bas, cependant que tous les points sur la surface sont affectés à des rayons locaux de courbure qui peuvent être identiques ou différents, et cependant que le au moins un revêtement complète de telle façon les corps de base que les micro-éléments de focalisation (10) présentent, au moins dans la zone de leur vertex (21), des rayons locaux de courbure plus grands que les corps de base (15).

2. Procédé selon la revendication 1, **caractérisé en ce que** les corps de base ont un effet focalisant et une longueur focale différente de la longueur focale nominale.

3. Procédé selon la revendication 1 ou 2, **caractérisé en ce que** la formation des corps complémentaires a lieu par application d'au moins deux revêtements qui peuvent être identiques ou différents, cependant que les revêtements peuvent être appliqués sur des zones identiques ou différentes de la trame de corps de base.

4. Procédé selon une des revendications de 1 à 3, **caractérisé en ce que**, pour la formation des corps complémentaires, le revêtement ou au moins un des revêtements est déformé, de préférence par chauffage, ce par quoi les micro-éléments de focalisation obtiennent la longueur focale nominale prédéterminée.

5. Agencement micro-optique de représentation (3) comprenant un agencement micro-optique d'observation (1) ayant une pluralité de micro-éléments de focalisation (10) qui ont une longueur focale nominale prédéterminée et constituent une trame d'observation, et un agencement de micro-structures (2) ayant une pluralité d'éléments de microstructure (4) qui constituent une trame de microstructure, cependant que l'agencement de micro-structures (2) peut être observé à travers l'agencement micro-optique d'observation (1), cependant que l'agencement micro-optique d'observation (1) est **caractérisé en ce que**
- les micro-éléments de focalisation (10) comportent respectivement un corps de base (15) et un corps complémentaires (20), cependant que
- les corps de base (15) sont des préformes de micro-éléments de focalisation qui sont agencées en une trame de corps de base, cependant que l'agencement tramé de corps de base est fabriqué
- par gaufrage des corps de base dans une feuille thermoplastique ou dans une feuille revêtue d'un vernis durcissable par rayonnement avec irradiation subséquente, ou
- par génération de préformes cylindriques de corps de base à partir d'un matériau photosensible et fonte ultérieure des préformes de corps de base de manière à obtenir des corps de base sphériques,
et
- les corps complémentaires (20) sont au moins un revêtement de la trame de corps de base ou d'au moins une zone partielle, de la trame de corps de base, s'étendant sur plusieurs corps de base, et complètent les corps de base (15) de manière à engendrer les micro-éléments de focalisation (10) ayant la longueur focale nominale prédéterminée, de telle sorte que les micro-éléments de focalisation (10) focalisent dans le plan de l'agencement de micro-structures (2),
cependant que chaque corps de base (15) présente une surface courbée ayant un vertex (16) en haut et une base (17) en bas, cependant que tous les points sur la surface sont affectés à des rayons locaux de courbure qui peuvent être identiques ou différents, et cependant que le au moins un revêtement complète de telle façon les corps de base que les micro-éléments de focalisation présentent, au moins dans la zone de leur vertex (21), des rayons locaux de courbure plus grands que les corps de base (15).

6. Agencement micro-optique de représentation selon la revendication 5, **caractérisé en ce que** les corps de base ont un effet focalisant et une longueur focale différente de la longueur focale nominale.

7. Agencement micro-optique de représentation selon la revendication 5 ou 6, **caractérisé en ce que** les corps de base sont agencés en une trame de corps de base ayant des interstices entre des corps de base adjacents.

8. Agencement micro-optique de représentation selon une des revendications de 5 à 7, **caractérisé en ce que** les corps complémentaires sont réalisés en au moins deux revêtements, cependant que les revêtements peuvent être identiques ou différents et peuvent être répartis de manière semblable ou différente sur la trame de corps de base.

9. Agencement micro-optique de représentation selon une des revendications de 5 à 8, **caractérisé en ce que** le au moins un revêtement est une revêtement fonctionnel, de préférence un revêtement de colle ou un revêtement de protection, en particulier un revêtement résistant aux salissures, ou un revêtement à la fois résistant aux salissures et adhésif, et/ou que les corps complémentaires recouvrent complètement ou essentiellement complètement la trame de corps de base.

10. Agencement micro-optique de représentation selon une des revendications de 5 à 9, **caractérisé en ce que** l'agencement micro-optique d'observation comporte au moins deux micro-éléments de focalisation différents qui se distinguent par le fait qu'ils ont des corps de base différents et/ou des corps complémentaires différents.

11. Elément de sécurité (6, 8) destiné à la protection de l'authenticité d'un support de données (5), en particulier d'un document de valeur, **caractérisé en ce qu'**il présente un agencement micro-optique de représentation (3) selon une des revendications de 5 à 10 ou un agencement micro-optique de représentation (3) pouvant être obtenu suivant un procédé selon les revendications de 1 à 4.

12. Support de données (5), en particulier un document de valeur, **caractérisé en ce qu'**il présente un agencement micro-optique de représentation (3) selon une des revendications de 5 à 10 ou un agencement micro-optique de représentation (3) pouvant être obtenu suivant un procédé selon les revendications de 1 à 4.

13. Procédé de fabrication d'un support de données (5), en particulier d'un document de valeur, **caractérisé en ce qu'**il est est doté d'un élément de sécurité (6, 8) selon la revendication 11, et que les corps complémentaires (20) sont parachevés par application du au moins un revêtement sur le support de données (5), ou que les corps complémentaires (20) sont déformés afin de générer la longueur focale nominale des micro-éléments de focalisation (10).
